# EUROPÄISCHE PATENTSCHRIFT

(11) **EP 3 487 599 B1**
(45) Veröffentlichungstag und Bekanntmachung des Hinweises auf die Patenterteilung: **08.04.2020**
(21) Anmeldenummer: 17727899.1
(22) Anmeldetag: 06.06.2017
(51) Int. Cl.: B01D 19/04, D21C 3/28, C11D 3/00

(54) **ENTSCHÄUMERFORMULIERUNGEN ENTHALTEND ORGANOPOLYSILOXANE**
DEFOAMING FORMULATIONS CONTAINING ORGANOPOLYSILOXANES
FORMULATIONS ANTI-MOUSSE CONTENANT DES ORGANOPOLYSILOXANES

(43) Veröffentlichungstag der Anmeldung: 29.05.2019
(73) Patentinhaber: Wacker Chemie AG, 81737 München (DE)
(72) Erfinder: BREHM, Christof, 84489 Burghausen (DE); BURGER, Willibald, 84489 Burghausen (DE); ZICHE, Wolfgang, 84489 Burghausen (DE)
(74) Vertreter: Deffner-Lehner, Maria
(86) Internationale Anmeldenummer: PCT/EP2017/063736
(87) Internationale Veröffentlichungsnummer: WO 2018/224131

(56) Entgegenhaltungen:
- EP-A2- 0 434 060
- EP-B1- 2 846 891

## Beschreibung

Die Erfindung betrifft Entschäumerformulierungen enthaltend Organopolysiloxane und deren Verwendung als Entschäumer, insbesondere in wässrigen Tensidsystemen.
In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaums kann auf mechanischem Wege oder durch den Zusatz von Entschäumern erfolgen. Dabei haben sich Entschäumer auf Siloxanbasis besonders bewährt.
Die Verbesserung der Wirksamkeit von Entschäumer auf Siloxanbasis ist dabei ein ständiger Prozess. Eine Vielzahl wissenschaftlicher Arbeiten (beispielsweise Denkov et al. Langmuir, 1999, 15, 8514, Langmuir, 1999, 15, 8530 oder zusammengefasst in P. Garrett, The science of defoaming, CRC Press, 2014, Chapter 4.5 "Oil Bridges and Antifoam Mechanism", v.a. S. 152 ff.) beschäftigen sich so mit dem Antischaum-Mechanismus, wobei bei Entschäumern auf Siloxanbasis der sogenannte Bridging-Stretching-Mechanismus favorisiert wird. Dieser Mechanismus beruht darauf, dass der siloxanbasierte Entschäumer in der Schaumlamelle zuerst eine Brücke (Bridge) ausbildet, deren Zerreißen dann zur Zerstörung der Schaumlamelle führt. Eine ausreichend geringe Viskosität wie auch eine gute Spreitungsfähigkeit der Entschäumer ist somit notwendig, damit in der Schaumlamelle eine Brücke (Bridge) ausbildet werden kann.

Im Laufe des Verbesserungsprozesses der siloxanbasierten Entschäumer zielten viele Arbeiten auf die Erhöhung der Geschwindigkeit der Ausbildung dieser Entschäumerbrücke, somit auf die Erhöhung der sofortigen Wirksamkeit (auch Schaum-Knockdown bezeichnet) von Entschäumern. Hier konnte durch die Inkorporierung hydrophober Füllstoffe, insbesondere Kieselsäuren, deutliche Effizienzsteigerungen erzielt werden. Die Inkorporierung kann dabei durch die Verteilung von (vor-)hydrophobierter Kieselsäure in ein Polydimethylsiloxan, z. B. gemäß DE 29 25 722 A, geschehen. Alternativ kann auch eine (in-situ) Hydrophobierung erfolgen, z. B. durch Erhitzen von in Polydimethylsiloxanen verteilter hydrophiler Kieselsäure, z. B. gemäß US 3,383,327 A, oder durch Anwendung basischer Katalysatoren (US 3,560,401 A).

Eine weitere Wirkungssteigerung kann erfolgen, wenn der Entschäumer auf Siloxanbasis neben einem Polydiorganosiloxan und Kieselsäure noch ein Copolymer aus (CH₃)₃SiO_{1/2}- und SiO₂-Bausteinen enthält, wie es z. B. in US 4,145,308 A beschrieben ist.

Ebenso ist durch Zusatz von Polyether-Polysiloxan-Copolymeren eine Wirkungssteigerung Silicon-basierter Entschäumer ebenfalls möglich. In US 7,105,581 B1 sind Antischaummittel auf Basis von Polyether-Polysiloxan-Copolymeren beschrieben. Bei diesen zugesetzten Copolymeren handelt es sich um Tenside.

Typische Silicon-basierte Entschäumerzusammensetzungen können somit Polysiloxane, Füllstoffe wie hydrophobisierte Kieselsäuren, Copolymere aus (CH₃)₃SiO_{1/2}- und SiO₂-Bausteinen und Polyether-Polysiloxan-Copolymere enthalten.

Hauptaugenmerk der letzten Jahre war die Erhöhung der Langzeitwirkung von Entschäumern auf Siloxanbasis. Dieser Aspekt wurde in einer Reihe wissenschaftlicher Artikel untersucht (z. B. Denkov et al., Langmuir, 2000, 16, 2515 oder Marinova et al. und Langmuir, 2003, 19, 3084). Der Verlust an Wirkung nach einer gewissen Anwendungszeit wird darin als "Antifoam Exhaustion" oder auch "Antischaum-Deaktivierung" bezeichnet und auf eine Reihe von Effekten zurückgeführt, wie beispielsweise die Verringerung der Partikelgröße der Antischaum-Globul, oder die Emulgierung des sich auf der Oberfläche befindenden Antischaummittels, oder der Segregation von Polydimethylsiloxan und Kieselsäure in zwei verschiedene Populationen an Antischaum-Globuli (Kieselsäure-verarmt und Kieselsäure-angereichert).

Um diesen Effekten entgegenzuwirken und damit die Langzeitwirkung zu steigern, wurde in den letzten Jahrzehnten die Verwendung von anvernetzten oder zum Teil bereits gummiähnlichen Polydimethylsiloxanen als Teil eines Entschäumers vorgeschlagen, um dem Entschäumer ein elastisches Moment zu verleihen.

Derartige anvernetzte oder zum Teil bereits gummiähnliche Polydimethylsiloxane wurden beispielsweise durch das Inkorporieren von Silsesquisiloxan-Einheiten in das Polydimethylsiloxan (via Co-Hydrolyse) (US 2,632,736 A), durch das Inkorporieren eines Alkoxysilans oder eines Copolymers aus (CH₃)₃SiO_{1/2}- und SiO₂-Bausteinen in das Polydimethylsiloxan (via Äquilibrierung und/oder Kondensation)(EP 163 541 A2 und EP 217 501 A2) oder durch radikalische Vernetzung von Polydimethylsiloxanen (z. B. DE 3805661 A1 und EP 273 448 A2) hergestellt. Alternativ wurde die Herstellung anvernetzter und verzweigter Siloxane durch Umsetzung von endständig vinylhaltigen Siloxanen mit Si-H funktionellen Siloxanen im Sinne einer Hydrosilylierung vorgeschlagen (z. B. EP 434 060 A2, EP 516 109 A1, DE 44 44 175 A1 und GB 2257709 A1).

Allerdings sind diese Verfahren sehr unspezifisch, oftmals wenig reproduzierbar und liefern häufig schlecht handhabbare Produkte, da sie nahe bei dem Gelierpunkt arbeiten. Diese Verfahren werden somit auch entweder in einem inerten Polysiloxan oder in Gegenwart eines hohen Überschusses einer der Reaktionspartner (in der Regel der vinylhaltigen Komponente) als Lösemittel durchgeführt. Auch wurden gezielt hochvernetzte oder gar gelierte Produkte hergestellt, die dann aber wiederum der besseren Handhabbarkeit wegen mit einem größeren Überschuss an linearen Polysiloxanen kombiniert werden (z. B. EP 499 364 A1).
Die Charakterisierung der anvernetzten oder zum Teil bereits gummiähnlichen Polydimethylsiloxane erfolgt häufig durch Methoden, die aus der Elastomercharakterisierung bekannt sind, wie z. B. die Penetrationstiefe (EP 434 060 A2), den Weißenberg-Effekt (DE 38 050 661) oder auch die rheologische Charakterisierung. Beispielsweise werden in EP 499 364 A1 Entschäumer geliert oder in einer Emulsion geliert und die Elastomereigenschaft über den Verlustfaktor (tan delta) sowie den dynamischen Elastizitätsmodul (G') bei einer Frequenz von 10 Hertz und 25°C und einer Amplitude von < 2% charakterisiert. Gemäß WO 2011/069868 A2 werden Siloxan-basierten Entschäumern durch das Inkorporieren von Polysiloxanen sehr hoher Viskosität (> 1 Mio mPas) ein elastischer Moment verliehen, was durch die Bestimmung des Verlustfaktors (tan delta) bei 1 Hertz und einer Amplitude von 1% beschrieben wird. EP 2 846 891 B1 offenbart Entschäumerformulierungen auf der Basis von Organopolysiloxane und deren Verwendung in wässrigen Tensidsysteme, welche eine verbesserte Wirksamkeit zeigen aber dennoch leicht handhabbar sind.
Es bestand die Aufgabe, Entschäumerformulierungen auf Basis von Siloxanen bereitzustellen, die eine besonders hohe Effizienz beim Entschäumen aufweisen, insbesondere eine gute Langzeitwirkung aufweisen, und gut handhabbar sind.
Die Aufgabe wird durch die Erfindung gelöst.

Gegenstand der Erfindung sind Entschäumerformulierungen enthaltend
(1) Organopolysiloxane enthaltend pro Molekül mindestens eine Struktureinheit der allgemeinen Formel

   O_{1/2}R₂Si-Y-SiRO_{2/2} (I)

   und mindestens 2 Einheiten der allgemeinen Formel

   R¹R₂SiO_{1/2} (II)

   und Einheiten der allgemeinen Formel

   R₂SiO_{2/2} (III),

   wobei
   - R: gleich oder verschieden sein kann und einen einwertigen SiC-gebundenen Kohlenwasserstoffrest mit 1 bis 30 C-Atomen, der ein oder mehrere voneinander getrennte O-Atome enthalten kann und der frei von aliphatischen Kohlenstoff-Kohlenstoff-Mehrfachbindungen ist, bedeutet und
   - R¹: gleich R oder ein Alkenylrest mit 2 bis 30 C-Atomen, vorzugsweise ein Methyl- oder ein Vinylrest ist, wobei mindestens ein Alkenylrest pro Molekül enthalten ist,
   - Y: einen zweiwertigen Kohlenwasserstoffrest mit 2 bis 30 C-Atomen bedeutet,
   mit der Maßgabe, dass das Organopolysiloxan ein Strukturelement der Formel

   R₂Y²SiO-(SiR₂O)ₓ₁-SiRY¹O-(SiR₂O)ₓ₂-SiR₂R¹ (IV)

   enthält, wobei
   R und R¹ die oben dafür angegebene Bedeutung haben,
   Y¹ einen zweiwertigen Kohlenwasserstoffrest mit 2 bis 30 C-Atomen, der an eine Gruppe der Formel SiR₂O_{1/2} gebunden ist, bedeutet,
   Y² einen zweiwertigen Kohlenwasserstoffrest mit 2 bis 30 C-Atomen, der an eine Gruppe der Formel SiRO_{2/2} gebunden ist, bedeutet und
   x₁ und x₂ gleich 0 oder eine ganze Zahl ist,
   mit der Maßgabe, dass die Summe x₁+x₂=x ist,
   wobei x durchschnittlich größer 5, vorzugsweise größer 10, und kleiner 100, vorzugsweise kleiner 80, bevorzugt kleiner 60, ist,
(2) Füllstoffe und
(3) Organopolysiloxanharze aus Einheiten der allgemeinen Formel

   R²ₑ(R³O)_{f}SiO_{(4-e-f)/2} (V),

   worin
   - R²: gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
   - R³: gleich oder verschieden sein kann und ein Wasserstoffatom oder einen einwertigen, gegebenenfalls substituierten Kohlenwasserstoffrest mit 1 bis 4 C-Atomen bedeutet,
   - e: 0, 1, 2 oder 3 ist und
   - f: 0, 1, 2 oder 3 ist,
   mit der Maßgabe, dass die Summe e+f kleiner oder gleich 3 ist und in weniger als 50 % aller Einheiten der Formel (V) im Organopolysiloxanharz die Summe e+f gleich 2 ist.
   Die erfindungsgemäßen Entschäumerformulierungen können als weitere Bestandteile
   gegebenenfalls
(4) Polyorganosiloxane der allgemeinen Formel R⁴R₂SiO(SiR₂O)ₘSiR₂R⁴ (VIa) oder 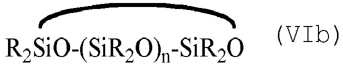 wobei
   - R: gleich oder verschieden sein kann und die oben dafür angegebene Bedeutung hat,
   - R⁴: gleich oder verschieden sein kann und R oder -OR⁵ sein kann, wobei
   - R⁵: ein Wasserstoffatom oder einen einwertigen, gegebenenfalls substituierten Kohlenwasserstoffrest mit 1 bis 25 C-Atomen bedeutet,
   - m: eine ganze Zahl ist, vorzugsweise von 1 bis 2500 ist, bevorzugt m so gewählt ist, dass die Polyorganosiloxane der Formel (VIa) bei 25°C und 101,425 kPa eine Viskosität von 10 bis 1 000 000 mPas haben,
   - n: eine ganze Zahl ist, vorzugsweise von 2 bis 20 ist, bevorzugt n so gewählt ist, dass die Polyorganosiloxane der Formel (Vb) bei 25°C und 101,425 kPa eine Viskosität von 2 bis 15 mPas haben,
   wobei die Polyorganosiloxane auch geringe Anteile an Verzweigungen, vorzugsweise T-Einheiten (R⁴SiO_{3/2}) und Q-Einheiten (SiO₂), enthalten können,
   gegebenenfalls
(5) wasserunlösliche organische Verbindungen, gegebenenfalls
(6) polyethermodifizierte Polysiloxane, welche linear oder verzweigt sein können und mindestens eine Polyethergruppe enthalten
   und gegebenenfalls
(7) alkalische oder saure Katalysatoren oder deren
   Umsetzungsprodukte mit den Komponenten (1) bis (6), enthalten.

Die erfindungsgemäßen die Entschäumerformulierungen weisen bei 100 rad/s vorzugsweise einen Verlustfaktor (tan delta) zwischen 1,0 und 5,0, bevorzugt zwischen 1,5 und 3,0 auf, wobei über den betrachteten Frequenzbereich von 1 bis 100 rad/s der Unterschied im Verlustfaktor (Δ tan delta) vorzugsweise kleiner als 1,5, bevorzugt kleiner als 1,0, ist,
und die Entschäumer weisen vorzugsweise eine Viskosität bei 100 rad/s zwischen 1000 mPas und 300.000 mPas, bevorzugt zwischen 2000 und 100.000 mPas, auf, jeweils gemessen bei 25°C, wobei der Verlustfaktor und die Viskosität nach DIN 53019-4 bestimmt werden.

Überraschenderweise wurde im Laufe der Arbeiten zur Erhöhung der Effizienz von Entschäumern - sowohl bzgl. der Knock-Downwie auch der Langzeitwirkung - festgestellt, dass die rheologische Charakterisierung eines Entschäumers bei einer bestimmten Frequenz nicht ausreichend ist, um zwischen effizienten und weniger effizienten Entschäumern zu unterscheiden. Vielmehr muss die rheologische Charakterisierung über einen weiten Frequenz-Bereich erfolgen und dabei sowohl den elastischen Anteil (z.B. die Betrachtung des Verlustfaktors (tan delta) wie auch den viskosen Anteil (z.B. die Viskosität) umfassen. Man könnte sich diesen Befund dadurch erklären, dass es sich bei der Schaumerzeugung wie auch der Schaumzerstörung um sehr dynamische Prozesse, um eine Vielzahl unterschiedlicher Prozesse und auch um Prozesse mit unterschiedlichsten Geschwindigkeiten (z. B. Drainage der Schaumlamellen, Entschäumungsprozesse in der Lamelle oder im Bulk, etc.) handelt. Ein möglichst effizienter Entschäumer muss auch in möglichst allen Prozessen eine exzellente Wirkung aufweisen, weshalb sowohl niedrige wie auch hohe Frequenzen zu betrachten sind. In umfangreichen Versuchen wurde der Frequenzbereich von 1 bis 100 rad/s als optimale Bedingung zur Charakterisierung von Entschäumern gefunden.

Dass neben dem elastischen Anteil auch der viskose Anteil über einen weiten Frequenzbereich zu betrachten ist, erklärt sich durch den bereits erwähnten Bridging-Stretching-Mechanismus. Der Entschäumer sollte, um möglichst effizient zu sein, auch über den gesamten Frequenzbereich eine Fließfähigkeit aufweisen.

Wird wie in den im Stand der Technik beschriebenen Beispielen gelierter Produkte die Fließfähigkeit durch "Verdünnen" mit linearen - d.h. nicht elastischen - Bestandteilen hergestellt, so überträgt sich dies auch auf die Entschäumereffizienz. Insbesondere bei hohen Frequenzen (somit bei sehr schnellen Prozessen) wird dies eine Erhöhung des Verlustmoduls (tan delta) und somit eine Verringerung der elastischen Eigenschaft zur Folge haben.

Das ideale Polysiloxan muss somit eine möglichst hohe Dichte an Netzpunkten oder Verzweigungen aufweisen, damit das Kriterium einer möglichst hohen Elastizität erfüllt ist, so dass eine möglichst hohe Langzeitwirkung resultiert.

Aufgrund der besseren Handhabbarkeit darf diese hohe Netzpunktdichte aber auch nicht zu einer Gelierung führen. Dies führt zum Kriterium der Fließbarkeit, die vorhanden sein muss, damit in der Schaumlamelle eine Brücke ausgebildet werden kann. Ferner sollten diese beiden Kriterien auch zu jedem Zeitpunkt innerhalb der eingesetzten Entschäumungsprozesse erfüllt sein: Es sollte zu jedem Zeitpunkt kein Gelzustand einerseits (somit kein zu geringer Verlustfaktor (tan delta) aber auch keine zu geringe Elastizität andererseits (somit kein zu hoher Verlustfaktor (tan delta) vorliegen. Er sollte somit über den besagten Frequenzbereich einen niedrigen Verlustfaktor (tan delta) wie auch eine gute Fließfähigkeit aufweisen. Idealerweise muss ein Entschäumer somit als Hauptbestandteil ein Polysiloxan aufweisen, das obige Kriterien aufweist, ohne dass ein inertes Lösemittel, wie ein inertes Siloxan, vorhanden ist oder ohne dass das Polysiloxan in Gegenwart eines hohen Überschusses eines der Reaktionspartner als Lösemittel herzustellen ist.

Überraschenderweise wurde nun gefunden, dass die erfindungsgemäßen Entschäumerformulierungen für wässrige Tensidsysteme eine besonders hohe Effizienz aufweisen.

Die erfindungsgemäßen Organopolysiloxane (1) sind die Hauptkomponente in den erfindungsgemäßen Entschäumerformulierungen und liegen daher in einer größeren Menge vor als jede weitere Komponente (2) bis (7).

Vorzugsweise enthalten die Entschäumerformulierungen
(1) mindestens 30 Gew.%, bevorzugt mindestens 40 Gew.% , besonders bevorzugt mindestens 50 Gew.%, und vorzugsweise höchstens 98 Gew.%, bevorzugt höchstens 90 Gew.%, besonders bevorzugt höchstens 85 Gew.%, Organopolysiloxane,
(2) mindestens 1 Gew.%, bevorzugt mindestens 2 Gew.% , besonders bevorzugt mindestens 3 Gew.%, und vorzugsweise höchstens 15 Gew.%, bevorzugt höchstens 12 Gew.%, besonders bevorzugt höchstens 10 Gew.%, Füllstoffe,
(3) mindestens 1 Gew.%, bevorzugt mindestens 2 Gew.% , besonders bevorzugt mindestens 3 Gew.%, und vorzugsweise höchstens 15 Gew.%, bevorzugt höchstens 12 Gew.%, besonders bevorzugt höchstens 10 Gew.%, Organopolysiloxanharze aus Einheiten der Formel (V),
(4) mindestens 0 Gew.%, bevorzugt mindestens 3 Gew.%, besonders bevorzugt mindestens 5 Gew.%, und vorzugsweise höchstens 40 Gew.%, bevorzugt höchstens 30 Gew.%, besonders bevorzugt höchstens 20 Gew.%, Polyorganosiloxane der allgemeinen Formel (VIa) oder (VIb),
(5) mindestens 0 Gew.% und vorzugsweise höchstens 15 Gew.%, bevorzugt höchstens 10 Gew.%, besonders bevorzugt höchstens 7,5 Gew.%, wasserunlösliche organische Verbindungen,
(6) mindestens 0 Gew.% und vorzugsweise höchstens 15 Gew.%, bevorzugt höchstens 10 Gew.%, besonders bevorzugt höchstens 7,5 Gew.%, polyethermodifizierte Polysiloxane, welche linear oder verzweigt sein können und mindestens eine Polyethergruppe tragen, und
(7) mindestens 0 Gew.%, bevorzugt mindestens 0,05 Gew.%, besonders bevorzugt mindestens 0,1 Gew.%, und vorzugsweise höchstens 1 Gew.%, bevorzugt höchstens 0,5 Gew.%, besonders bevorzugt höchstens 0,3 Gew.%, alkalische oder saure Katalysatoren oder deren Umsetzungsprodukte mit den Komponenten (1) bis (6).

Vorzugsweise bestehen die Entschäumerformulierungen aus den Komponenten (1) bis (3) und ggf. (4) und ggf. (5) und ggf. (6) und ggf. (7).

Vorzugsweise handelt es sich bei den in den Entschäumerformulierungen eingesetzten Organopolysiloxanen (1) um Organopolysiloxane herstellbar indem,
(A) oligomere oder polymere Organosiliciumverbindungen, die Einheiten der allgemeinen Formel

   R¹R₂SiO_{1/2} (II),

   Einheiten der allgemeinen Formel

   R₂SiO_{2/2} (III),

   und Einheiten der allgemeinen Formel

   HRSiO_{2/2} (VII)

   enthalten, wobei
   R und R¹ die oben dafür angegebene Bedeutung haben,
   mit der Maßgabe, dass
   mindestens ein Alkenylrest R¹ pro Molekül enthalten ist, die Summe der Einheiten HRSiO_{2/2} und R¹R₂SiO_{1/2} durchschnittlich größer als 2,0 ist,
   und die Anzahl der Alkenylreste R¹ durchschnittlich größer ist als die Anzahl der Si-gebundenen Wasserstoffatome,
   und gegebenenfalls
(B) oligomere oder polymere Organosiliciumverbindungen, die Einheiten der allgemeinen Formel

   R⁶R₂SiO_{1/2} (VIII)

   und Einheiten der allgemeinen Formel

   R₂SiO_{2/2} (III)

   enthalten, wobei
   R die oben dafür angegebene Bedeutung aufweist und,
   R⁶ ein Alkenylrest mit 2 bis 30 C-Atomen, vorzugsweise ein
   Vinylrest ist,
   in Gegenwart von
(C) die Anlagerung von Si-gebundenem Wasserstoff an aliphatische Doppelbindung fördernde Katalysatoren umgesetzt werden,
   wobei das eingesetzte Verhältnis von aliphatischer Doppelbindung in den Komponenten (A) und gegebenenfalls (B) zu Si-gebundenem Wasserstoff in der Komponente (A) 1,2 bis 10, vorzugsweise 1,5 bis 5,0, bevorzugt 1,7 bis 3,0, beträgt.

Vorzugsweise handelt es sich bei den zur Herstellung der in den Entschäumerformulierungen verwendeten Organopolysiloxane (1) eingesetzten oligomeren oder polymeren Organosiliciumverbindungen (A) um solche der Formel

R¹R₂SiO-(SiR₂O)ₓ-(HSiR)_{y}-O-SiR₂R¹ (IX),

wobei R, R¹ und x die oben dafür angegebene Bedeutung aufweisen,
und y durchschnittlich mindestens 0,5, bevorzugt mindestens 0,6, besonders bevorzugt mindestens 0,7, und durchschnittlich höchstens 1,5, bevorzugt höchstens 1,2 und besonders bevorzugt höchstens 1,0, ist,
mit der Maßgabe, dass mindestens ein Alkenylrest R¹ pro Molekül enthalten ist,
die Summe der Einheiten HRSiO_{2/2} und R¹R₂SiO_{1/2} durchschnittlich größer als 2,0 ist,
und die Anzahl der Alkenylreste R¹ durchschnittlich größer ist als die Anzahl der Si-gebundenen Wasserstoffatome.

Vorzugsweise handelt es sich bei den zur Herstellung der in der Entschäumerformulierung verwendeten Organopolysiloxane (1) gegebenenfalls eingesetzten oligomeren oder polymeren Organosiliciumverbindungen (B) um solche der Formel

R⁶R₂SiO-(SiR₂O)_{z}-O-SiR₂R⁶ (X),

wobei R und R⁶ die oben dafür angegebene Bedeutung haben und z durchschnittlich größer 5, vorzugsweise größer 10, und kleiner 1000, vorzugsweise kleiner 500, besonders bevorzugt kleiner 250, ist.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl-, Cycloheptyl-, Methylcyclohexyl- und 4-Ethylcyclohexylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest und der α- und der β-Phenylethylrest.

Die Kohlenwasserstoffreste R können Ether- oder Polyethergruppen enthalten.

Bevorzugte Beispiele für R sind Methyl-, Ethyl- und Phenylreste. Ein besonders bevorzugtes Beispiel ist der Methylrest.

Wenn R¹ die Bedeutung von R hat, gelten für R¹ die oben für R angegebenen Beispiele ebenso wie die bevorzugten Beispiele.

Wenn R¹ ein Alkenylrest ist, sind Beispiele für Alkenylreste R¹ der Vinyl-, Allyl- und 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Vorzugsweise enthalten die Organopolysiloxane (1) durchschnittlich mehr als zwei Alkenylreste R¹.

Vorzugsweise ist Y ein zweiwertiger Kohlenwasserstoffrest mit 1 bis 12 C-Atomen, besonders bevorzugt mit 2 C-Atomen, wobei der Rest der Formel -CH₂CH₂- besonders bevorzugt ist.

Vorzugsweise sind Y¹ und Y² jeweils ein zweiwertiger Kohlenwasserstoffrest mit 1 bis 12 C-Atomen, besonders bevorzugt mit 2 C-Atomen, wobei der Rest der Formel -CH₂CH₂-besonders bevorzugt ist.

Beispiele für Y in der Struktureinheit (I), sowie Y¹ und Y² in der Struktureinheit (IV) sind solche der Formel -CH₂CH₂-, -CH(CH₃)-, -(CH₂)₄-, -(CH₂)₅-, -(CH₂)₆-, -(CH₂)₈-, -(CH₂)₁₀-, -(CH₂)₁₂-, wobei die Reste der Formel -CH₂CH₂-, -CH(CH₃)-, -(CH₂)₆- und -(CH₂)₈- bevorzugt sind und der Rest der Formel -CH₂CH₂- besonders bevorzugt ist.

Y sowie Y¹ und Y² können auch ungesättigt sein. Beispiele hierfür sind Reste der Formel -CH=CH- (cis oder trans) und - C(=CH₂)-.

Bei den erfindungsgemäßen Organopolysiloxanen (1) ist ein bevorzugtes Beispiel für eine Einheit der Formel (II) die Trimethylsiloxaneinheit sowie die Vinyldimethylsiloxaneinheit, wobei insbesondere mindestens eine Vinyldimethylsiloxaneinheit pro Molekül enthalten ist.
Bevorzugte Bespiele für Einheiten der Formel (III) sind Dimethylsiloxaneinheiten.

Vorzugsweise bedeutet R² einen Kohlenwasserstoffrest mit 1 bis 30 Kohlenstoffatomen.
Beispiele für Kohlenwasserstoffreste R gelten im vollen Umfang für Kohlenwasserstoffreste R².
Bevorzugte Beispiele für Reste R² sind der Methyl-, Ethyl- und Phenylrest.

Beispiele für Reste R³ sind das Wasserstoffatom und Alkylreste, wie der Methyl-, Ethyl-, n-Propyl-, iso-Propyl- und n-Butylrest.

Bevorzugt ist der Rest R³ ein Wasserstoffatom oder ein Methyl- oder Ethylrest.

Beispiele für Reste R⁵ sind das Wasserstoffatom und Alkylreste, wie der Methyl-, Ethyl-, n-Propyl-, iso-Propyl- und n-Butylrest sowie Isotridecyl-, n-Octyl, Stearyl-, 4-Ethyl-hexadecyl-, 2-Octyl-1-dodecyl- oder Eicosanylrest.

Bevorzugt ist der Rest R⁵ ein Wasserstoffatom oder ein C₁-C₂₅-Alkylrest, wie ein Methyl-, Ethyl- oder 2-Octyl-1-dodecylrest. Bevorzugte Beispiele für Reste R⁴ sind der Methyl-, Ethyl- und Phenylrest und der Hydroxy-, Methoxy-, Ethoxy- und 2-Octyl-1-dodecyloxyrest.

Gegebenenfalls eingesetzte Polyorganosiloxane der Formel (VIa) mit R⁴ gleich einem Rest -OR⁵ sind beispielsweise durch alkalisch katalysierte Kondensation von silanolterminierten Polydimethylsiloxanen und aliphatischen Alkoholen, wie Isotridecylalkohol, n-Octanol, Stearylalkohol, 4-Ethylhexadecanol, 2-Octyl-1-dodecanol oder Eicosanol, zugänglich.

Beispiele für Reste R⁶ sind der Vinyl-, Allyl- und 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Die Viskosität der in den erfindungsgemäßen Entschäumerformulierungen eingesetzten Organopolysiloxane (1) beträgt vorzugsweise mindestens 50 mPa·s, bevorzugt mindestens 500 mPa·s, und vorzugsweise höchstens 10 000 mPa·s, bevorzugt höchstens 5000 mPa·s, jeweils bei 25°C und 101,425 kPa.

Organopolysiloxane (1) können auch in geringem Umfang, vorzugsweise 0 bis 1 Mol %, insbesondere 0 bis 0,02 Mol %, bezogen auf die Summe aller Siloxaneinheiten, andere Siloxaneinheiten, wie RSiO_{3/2} (T)-Einheiten oder SiO₂ (Q)-Einheiten (wobei R die oben dafür angegebene Bedeutung hat) enthalten.

Organopolysiloxane (1) und Verfahren zu ihrer Herstellung sind beispielsweise beschrieben in US 6,258,913 B1, insbesondere Spalte 11, Zeile 6 bis Spalte 12, Zeile 50 (incorporated by reference).

Es kann eine Art von Organopolysiloxan (1) oder ein Gemisch aus mindestens zwei Arten von Organopolysiloxanen (1) eingesetzt werden.
Bei den Organosiliciumverbindungen (A), die zur Herstellung der in der erfindungsgemäßen Entschäumerformulierung eingesetzten Organopolysiloxane (1) verwendet werden, ist ein bevorzugtes Beispiel für eine Einheit der Formel (II) die
Trimethylsiloxaneinheit sowie die Vinyldimethylsiloxaneinheit, wobei insbesondere mindestens eine Vinyldimethylsiloxaneinheit pro Molekül enthalten ist.
Bevorzugte Bespiele für Einheiten der Formel (III) sind Dimethylsiloxaneinheiten.
Ein bevorzugtes Beispiel für eine Einheit der Formel (VII) ist die Hydrogenmethylsiloxaneinheit.
Organosiliciumverbindungen (A), wie die der Formel (IX), werden beispielsweise hergestellt durch Äquilibrieren von Organopolysiloxanen mit endständigen Einheiten der Formel R¹R₂SiO_{1/2} mit Organopolysiloxanen mit Si-gebundenen Wasserstoffatomen in HRSiO_{2/2}-Einheiten, wobei R und R¹ die oben dafür angegebene Bedeutung haben.
Die Organosiliciumverbindung (A) besitzt vorzugsweise eine Viskosität von 5 bis 150 mPa.s bei 25°C. Bei den Organosiliciumverbindungen (B), die gegebenenfalls zur Herstellung der in den erfindungsgemäßen Entschäumerformulierungen eingesetzten Organopolysiloxane (1) verwendet werden, ist ein bevorzugtes Beispiel für eine Einheit der Formel (VIII) die Vinyldimethylsiloxaneinheit.
Bevorzugte Bespiele für Einheiten der Formel (III) sind Dimethylsiloxaneinheiten.

Organosiliciumverbindung (B) insbesondere nach der Formel (X) sind bekannt und werden durch Äquilibrieren von Organopolysiloxanen mit endständigen Einheiten der Formel R⁶R₂SiO_{1/2} mit cyclischen Organopolysiloxanen oder HO- oder alkoxy-terminierten Organopolysiloxanen mit Einheiten der Formel R₂SiO hergestellt, wobei R und R⁶ die oben dafür angegebene Bedeutung haben.
Die Organosiliciumverbindung (B) besitzt vorzugsweise eine Viskosität von 5 bis 100.000 mPa.s bei 25°C. Als die Anlagerung von Si-gebundenem Wasserstoff an aliphatische Doppelbindung fördernde Katalysatoren (C) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten.
Bei den Katalysatoren (C) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z. B. PtCl₄, H₂PtCl₆.6H₂O, Na₂PtCl₄.4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆.6H₂O und Cyclohexanon, Platin-Vinylsiloxankomplexe, wie Platin-1,3-Divinyl-1,1,3,3-tetramethyldisiloxan-komplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cycloactadien- Platindichlorid, Norbornadien-Platindichlorid, Gamma-picolin- Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.
Der Katalysator (C) wird vorzugsweise in Mengen von 1 bis 100 Gew.-ppm (Gewichtsteilen je Million Gewichtsteilen), bevorzugt in Mengen von 4 bis 20 Gew.-ppm, jeweils berechnet als elementares Platin und bezogen auf das Gesamtgewicht der Komponenten (A) und gegebenenfalls (B), verwendet.
Das Verfahren zur Herstellung der in der erfindungsgemäßen Entschäumerformulierung verwendeten Organopolysiloxane (1) wird vorzugsweise beim Druck der umgebenden Atmosphäre, also etwa bei 1020 hPa (abs.), durchgeführt, es kann aber auch bei höheren oder niedrigeren Drücken durchgeführt werden.
Ferner wird das Verfahren vorzugsweise bei einer Temperatur von 50°C bis 180°C, bevorzugt 60°C bis 140°C, durchgeführt.

Bei dem Herstellungsverfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.
Die gegebenenfalls mitverwendeten inerten organischen Lösungsmittel werden anschließend destillativ entfernt.
Hochpolymere Produkte bleiben bevorzugt im inerten Lösungsmittel gelöst.

Vorzugsweise weisen die in den erfindungsgemäßen Entschäumerformulierungen eingesetzten Füllstoffe (2) eine BET-Oberfläche von 20 bis 1000 m²/g auf. Vorzugsweise weisen die Füllstoffe (2) eine Partikelgröße von weniger als 10 µm und eine Agglomeratgröße von weniger als 100 µm auf.

Beispiele für Füllstoffe (2) sind Siliciumdioxid (Kieselsäuren), Titandioxid, Aluminiumoxid, Metallseifen, Quarzmehl, PTFE-Pulver, Fettsäureamide, z. B. Ethylenbisstearamid, und fein verteilte hydrophobe Polyurethane.

Vorzugsweise werden als Füllstoffe (2) Siliciumdioxid (Kieselsäuren), Titandioxid oder Aluminiumoxid mit einer BET-Oberfläche von 20 bis 1000 m²/g eingesetzt. Vorzugsweise weisen diese Füllstoffe eine Partikelgröße von weniger als 10 µm und eine Agglomeratgröße von weniger als 100 µm auf.

Bevorzugt als Füllstoffe (2) sind Kieselsäuren, insbesondere solche mit einer BET-Oberfläche von 50 bis 800 m²/g. Diese Kieselsäuren können pyrogene oder gefällte Kieselsäuren sein. Es sind als Füllstoffe (2) sowohl vorbehandelte Kieselsäuren einsetzbar, also hydrophobe Kieselsäuren, als auch hydrophile Kieselsäuren. Beispiele für handelsübliche hydrophobe Kieselsäuren, die erfindungsgemäß eingesetzt werden können, sind HDK® H2000, eine pyrogene mit Hexamethyldisilazanen behandelte Kieselsäure mit einer BET-Oberfläche von 140 m²/g (käuflich erhältlich bei der Wacker-Chemie GmbH, Deutschland) und eine gefällte mit Polydimethylsiloxan behandelte Kieselsäure mit einer BET-Oberfläche von 90 m²/g (käuflich erhältlich unter der Bezeichnung "Sipernat D10" bei der Degussa AG, Deutschland).

Hydrophile Kieselsäuren können auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (1) oder (4) oder in einer Mischung aus den Komponenten (1), (3) und gegebenenfalls (4) und gegebenenfalls (5) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden.

Bei der in den erfindungsgemäßen Entschäumerformulierungen eingesetzten Komponente (3) handelt es sich vorzugsweise um Siliconharze aus Einheiten der Formel (V), bei denen in weniger als 30%, bevorzugt in weniger als 5%, der Einheiten im Harz die Summe e+f gleich 2 ist.

Bevorzugt handelt es sich bei den Organopolysiloxanharzen (3) aus Einheiten der Formel (V) um
MQ-Harze aus Einheiten der Formeln
- SiO₂: (Q-Einheiten) und
- R²₃SiO_{1/2}: (M-Einheiten),
wobei R² die oben dafür angegebene Bedeutung hat.
Das molare Verhältnis von M- zu Q-Einheiten liegt dabei vorzugsweise im Bereich von 0,5 bis 2,0, bevorzugt im Bereich von 0,6 bis 1,0. Neben den M- und Q-Einheiten können die MQ-Harze gegebenenfalls noch geringe Mengen an R²SiO_{3/2} oder (R³O)SiO_{3/2} (T)-Einheiten oder R²₂SiO_{2/2} (D)-Einheiten, in Mengen von vorzugsweise 0,01 bis 20 Mol%, bevorzugt 0,01 bis 5 Mol %, bezogen auf die Summe aller Siloxaneinheiten, enthalten, wobei R³ die oben dafür angegebene Bedeutung hat. Diese MQ-Harze können außerdem bis zu 10 Gew.-% freie Si-gebundene Hydroxy- oder Alkoxygruppen, wie Methoxy- oder Ethoxygruppen, enthalten.

Vorzugsweise haben diese Organopolysiloxanharze (3) bei 25°C und 101,425 kPa eine Viskosität größer 1000 mPa·s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Beispiele für in den erfindungsgemäßen Entschäumerformulierungen gegebenenfalls eingesetzte Polyorganosiloxane (4) sind Polydimethylsiloxane der Formel (VIa) mit einer Viskosität von 10 bis 1.000.000 mPa·s bzw. cyclische Polydimethylsiloxane der Formel (VIb) mit einer Viskosität von 2 bis 15 mPa·s, jeweils bei 25°C und und 101,425 kPa.

Obwohl in Formel (VI) nicht angegeben, können diese Polyorganosiloxane (4) 0 bis 1 Mol %, vorzugsweise 0 bis 0,02 Mol %, bezogen auf die Summe aller Siloxaneinheiten, andere Siloxaneinheiten, wie RSiO_{3/2} (T)-Einheiten oder SiO₂ (Q)-Einheiten (wobei R die oben dafür angegebene Bedeutung hat) enthalten.

Bei den erfindungsgemäßen Entschäumerformulierungen können wasserunlösliche organische Verbindungen (5) eingesetzt werden. Unter dem Begriff "wasserunlöslich" soll im Sinne der vorliegenden Erfindung eine Löslichkeit in Wasser bei 25°C und einem Druck von 101,425 kPa von maximal 3 Gewichtsprozenten verstanden werden.

Bei der gegebenenfalls eingesetzten Komponente (5) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z.B. Pentandiol-1,3-diisobutyrat, Fettsäureestern, wie z.B. Octylstearat, Dodecylpalmitat oder iso-Propylmyristat, Fettalkoholen, Ethern niedermolekularer Alkohole, Phthalaten, Estern der Phosphorsäure und Wachsen.

Bei den erfindungsgemäßen Entschäumerformulierungen können polyethermodifizierte Polysiloxane (6), die linear oder verzweigt sein können und mindestens eine Polyethergruppe tragen, eingesetzt werden. Derartige polyethermodifizierte Polysiloxane sind bekannt und z. B. in EP 1076073 A1, insbesondere Seite 2, Zeile 35 bis Seite 4, Zeile 46, beschrieben (incorporated by reference).

Beispiele für alkalische Katalysatoren (7) sind Alkali- und Erdalkalihydroxide, wie NaOH, KOH, CsOH, LiOH und Ca(OH)₂. Beispiele für saure Katalysatoren (7) sind Salzsäure, Schwefelsäure und Phosphornitrilchloride.
Bei den Umsetzungsprodukten von (7) mit den Komponenten (1) bis (6) handelt es sich beispielsweise um das Produkt aus der als Füllstoff (2) bevorzugten Kieselsäure mit Alkalihydroxiden, wie z.B. Kaliumsilicat oder Natriumsilicat.
Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Bei den in den erfindungsgemäßen Entschäumerformulierungen eingesetzten Komponenten (2) bis (7) kann es sich jeweils um eine Art einer solchen Komponente wie auch um ein Gemisch aus mindestens zwei Arten einer jeweiligen Komponente handeln.

Die erfindungsgemäßen Entschäumerformulierungen haben eine Viskosität von vorzugsweise 100 bis 2 000 000 mPa·s, besonders bevorzugt von 10000 bis 80 000 mPa·s, jeweils bei 25°C und 101,425 kPa.

Das Herstellen der erfindungsgemäßen Entschäumerformulierungen kann nach bekannten Verfahren, wie durch Mischen aller Komponenten erfolgen, wie z. B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen enthalten ist, zu verhindern. Im Anschluss kann bei Bedarf die in situ Hydrophobierung der Füllstoffe erfolgen.
Es ist auch möglich erst die Komponenten (1) vorzulegen und ggf. zu erhitzen und dann sukzessive die Komponenten (2), (3), ggf. (4) und ggf. (5) und ggf. (6) und ggf. (7) zuzugeben.
In einer bevorzugten Ausführungsform wird Komponente (3) in gelöster Form als Lösung in Komponente (4) oder Teilen der Komponente (4) oder als Lösung in Komponente (5) oder Teilen der Komponente (5) zugegeben.

Gegenstand der Erfindung sind weiterhin Emulsionen enthaltend erfindungsgemäße Entschäumerformulierungen,
Emulgatoren und
Wasser

Falls es sich bei den erfindungsgemäßen Entschäumerformulierungen um Emulsionen handelt, können alle Emulgatoren eingesetzt werden, die dem Fachmann zur Herstellung von Siliconemulsionen bekannt sind, wie z. B. nichtionische, anionische oder kationische Emulgatoren.
Bevorzugt werden Emulgatormischungen eingesetzt, wobei mindestens ein nichtionischer Emulgator enthalten sein sollte.

(Nicht einschränkende) Beispiele für verwendete nichtionische Emulgatoren sind:
1. Alkylpolyglycolether, vorzugsweise solche mit 3 bis 30 EO-Einheiten und Alkylresten von 8 bis 20 C-Atomen.
2. Carbonsäurepolyglycolester, insbesondere Fettsäurepolyglycolester, vorzugsweise solche mit größer 6 EO-Einheiten und Carbonsäureresten von 8 bis 20 C-Atomen.
3. Ethoxylierte oder nicht ethoxylierte Sorbitanfettsäureester.
4. Ethoxyliertes Rizinusöl oder hydrierte Varianten.
5. Polyglycerincarbonsäureester.
6. Alkylpolyglykoside der allgemeinen Formel R*-O-Z_{O}, worin R* einen linearen oder verzweigten, gesättigten oder ungesättigten Alkylrest mit im Mittel 8-24 C-Atomen und Z_{O} einen Oligoglykosidrest mit im Mittel o = 1-10 Hexose- oder Pentoseeinheiten oder Gemischen davon bedeuten.
7. Alkylarylpolyglycolether, vorzugsweise solche mit 5 bis 30 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 30 EO- bzw. PO-Einheiten.
9. Polyvinylalkohol, der noch 5 bis 50%, vorzugsweise 8 bis 20 Vinylacetateinheiten aufweist, mit einem Polymerisationsgrad von 500 bis 3000.
10. Additionsprodukte von Alkylaminen mit Alkylresten von 8 bis 22 C-Atomen mit Ethylenoxid oder Propylenoxid.
11. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
12. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

### Bevorzugte nicht-ionische Emulgatoren sind

1. Alkylpolyglycolether, vorzugsweise solche mit 3 bis 30 EO-Einheiten und Alkylresten von 8 bis 20 C-Atomen wie z.B. Ceteareth-20, Oleth-10, Oleth-20, Laureth-3, Laureth-4, Laureth-20, Laureth-23, Trideceth-5, Trideceth-6, Trideceth-8, Trideceth-10, Trideceth-12, Trideceth-16, Trideceth-20, Steareth-20 oder Steareth-21 (nach INCI-Bezeichnung).
2. Carbonsäurepolyglycolester, insbesondere Fettsäurepolyglycolester, vorzugsweise solche mit größer 6 EO-Einheiten und Carbonsäureresten von 8 bis 20 C-Atomen, wie z.B. PEG-20 Stearat, PEG-20 Laurat, PEG-7 Olivate, PEG-8 Oleate, PEG-8 Laurate HLB PEG-6 Stearate, PEG-20-Stearate oder PEG-100 Stearate (nach INCI-Bezeichnung).
3. Ethoxylierte oder nicht ethoxylierte Sorbitanfettsäureester, wie z.B. Sorbitan Laurate, Polysorbat 20, Polysorbat 60, Polysorbat 80 oder Polysorbat 85 (nach INCI-Bezeichnung).
4. Ethoxyliertes Rizinusöl oder hydrierte Varianten, wie z.B. (Bezeichnung nach INCI-Nomenklatur) PEG 200 Castor Oil oder PEG-60 hydrogenated Castor Oil.
5. Polyglycerincarbonsäureester, wie z.B. Polyglycerin-10 Oleat, Polyglycerin-10 Laurat oder Polyglycerin-10-Stearat.
6. Alkylpolyglykoside der allgemeinen Formel R*-O-Z_{O}, worin R* einen linearen oder verzweigten, gesättigten oder ungesättigten Alkylrest mit im Mittel 8-24 C-Atomen und Z_{O} einen Oligoglykosidrest mit im Mittel o = 1-10 Hexose- oder Pentoseeinheiten oder Gemischen davon bedeuten, wie z.B. Glucopon 215, Glucopon 225, Glucopon 600 (Bezeichnung nach Handelsnamen).

(Nicht einschränkende) Beispiele für anionische Emulgatoren sind:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 30 Ethylenoxid (EO)-bzw. Propylenoxid(PO)einheiten.
2. Sulfonate, besonders Alkylsulfonate mit 8 bis 18 C-Atomen, Alkylarylsulfonate mit 8 bis 18 C-Atomen.
3. Alkali- und Ammoniumsalze von Carbonsäuren mit 8 bis 20 C-Atomen im Alkyl-, Aryl-, Alkaryl- oder Aralkylrest, insbesondere Alkali- und Ammoniumsalze von Fettsäuren vorzugsweise solche mit Carbonsäureresten von 8 bis 20 C-Atomen.

Bevorzugte anionische Emulgatoren sind Alkali- und Ammoniumsalze von Carbonsäuren mit 8 bis 20 C-Atomen im Alkyl-, Aryl-, Alkaryl- oder Aralkylrest, besonders bevorzugte anionische Emulgatoren sind Alkali- und Ammoniumsalze von Fettsäuren, vorzugsweise solche mit Carbonsäureresten von 8 bis 20 C-Atomen, wie z.B. Natriumsalze, Kaliumsalze, Triethanolammoniumsalze der Laurinsäure, Myristinsäure, Palmitinsäure, Stearinsäure oder auch Ölsäure.

(Nicht einschränkende) Beispiele für kationische Emulgatoren sind:
1. Salze von primären, sekundären und tertiären Fettaminen mit 8 bis 24 C-Atomen mit Essigsäure, Schwefelsäure, Salzsäure und Phosphorsäuren.
2. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
3. Quaternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate

Weiterhin können als Verdicker bekannte Verbindungen, wie Polyacrylsäure, Polyacrylate, Celluloseether wie Carboxymethylcellulose und Hydroxyethylcellulose, Polyurethane, natürliche Verdicker, wie z. B. Xanthan Gum, sowie Konservierungsmittel und andere übliche und dem Fachmann bekannte Zusätze zugesetzt werden.

Die kontinuierliche Phase der erfindungsgemäßen Emulsionen ist bevorzugt Wasser. Es können jedoch auch erfindungsgemäße Entschäumerformulierungen in Form von Emulsionen hergestellt werden, bei denen die kontinuierliche Phase durch die Komponenten (1), (2) und (3) und ggf. (4) und ggf. (6) und ggf. (7) gebildet werden oder durch Komponente (5) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl-in-Wasser-Emulsionen bevorzugt enthaltend
5 bis 50 Gew.-% erfindungsgemäße Entschäumerformulierungen enthaltend Komponenten (1) bis (3) und ggf. (4) und ggf. (5) und ggf. (6) und ggf. (7),
1 bis 20 Gew.-% Emulgatoren und ggf. Verdicker und
30 bis 94 Gew.-% Wasser.

Die erfindungsgemäßen Zusammensetzungen können auch als frei fließende Pulver formuliert werden. Diese sind z. B. bei der Anwendung in pulverförmigen Waschmitteln bevorzugt. Die Herstellung dieser Pulver ausgehend von den erfindungsgemäßen Entschäumerformulierungen enthaltend Komponenten (1) bis (3) und ggf. (4) und ggf. (5) und ggf. (6) und ggf. (7) erfolgt nach dem Fachmann bekannten Verfahren, wie Sprühtrocknung oder Aufbaugranulation und mit dem Fachmann bekannten Zusätzen.

Gegenstand der Erfindung sind weiterhin Pulver enthaltend erfindungsgemäße Entschäumerformulierungen und Trägermaterialien.

Die erfindungsgemäßen Pulver enthalten bevorzugt 2 bis 20 Gewichts-% der erfindungsgemäßen Entschäumerformulierungen, die die Komponenten (1) bis (3) und ggf. (4) und ggf. (5) und ggf. (6) und ggf. (7) enthalten.

Als Träger kommen z. B. Zeolithe, Natriumsulfat, Natriumbicarbonat, Natriumcarbonat, Cellulosederivate, Harnstoff sowie Harnstoff-Derivate und Zucker zum Einsatz.

Die erfindungsgemäßen Pulver enthalten 80 bis 98 Gew.-% Trägermaterialien. Weitere Bestandteile der erfindungsgemäßen Pulver können z. B. Wachse sein oder organische Polymere, wie sie z. B. in EP-A 887097 und EP-A 1060778 beschrieben sind.

Die erfindungsgemäßen Entschäumerformulierungen wie auch deren Emulsionen oder Pulver können überall eingesetzt werden, wo Entschäumerformulierungen auf der Basis von Organosiliciumverbindungen auch bisher eingesetzt wurden.

Dies gilt insbesondere zur Bekämpfung von Schaum in wässrigen Tensidsystemen, für die Anwendung in Wasch- und Reinigungsmitteln, zur Bekämpfung von Schaum in Abwasseranlagen, bei Textilfärbeverfahren, bei der Erdgaswäsche, in Polymerdispersionen, und zum Entschäumen von bei der Zellstoffherstellung anfallenden wässrigen Medien.
Die Verwendung der erfindungsgemäßen Entschäumerformulierung in nichtwässrigen Systemen wie bei der Teerdestillation oder der Erdölverarbeitung wird ausgeschlossen.

Ein weiterer Gegenstand der vorliegenden Erfindung ist daher ein Verfahren zum Entschäumen und/oder zur Verhinderung des Schäumens von Medien, indem die erfindungsgemäßen Entschäumerformulierungen oder deren Emulsionen oder Pulver mit den Medien vermischt werden.

Vorzugsweise werden die erfindungsgemäßen Entschäumerformulierungen zum Entschäumen und/oder zur Verhinderung des Schäumens bei der Zellstoffherstellung anfallenden wässrigen Medien eingesetzt.

Die erfindungsgemäßen Entschäumerformulierungen können weiterhin in Wasch- und Reinigungsmitteln und Pflegemitteln, wie z. B. Weichspüler, eingesetzt werden, wobei die erfindungsgemäßen Entschäumerformulierungen in Substanz oder in Form von Emulsionen oder Pulvern eingesetzt werden können.

Ein weiterer Gegenstand der vorliegenden Erfindung sind daher Wasch- und Reinigungsmittel, enthaltend die erfindungsgemäßen Entschäumerformulierungen oder die erfindungsgemäßen Entschäumerformulierungen in Form von Emulsionen oder in Form von Pulvern.

Der Zusatz der erfindungsgemäßen Entschäumerformulierung zu den schäumenden Medien kann direkt erfolgen, gelöst in geeigneten Lösungsmitteln, wie Toluol, Xylol, Methylethylketon oder tert.-Butanol, als Pulver oder als Emulsion. Die zur Erzielung der gewünschten Entschäumerwirkung notwendige Menge richtet sich z. B. nach der Art des Mediums, der Temperatur und der auftretenden Turbulenz.

Bevorzugt werden die erfindungsgemäßen Entschäumerformulierungen in Mengen von 0,1 Gew.-ppm bis 1 Gew.-%, insbesondere in Mengen von 1 bis 100 Gew.-ppm, bezogen auf das Gesamtgewicht des zu entschäumenden Mediums, zum schäumenden Medium zugegeben.

Überraschenderweise wurde gefunden, dass die Wirksamkeit und Handhabbarkeit der erfindungsgemäßen Entschäumerformulierungen durch das erfindungsgemäße Verfahren wesentlich verbessert wird. Die erfindungsgemäßen Entschäumerformulierungen zeichnen sich besonders durch eine sehr gute Handhabbarkeit und Dosierbarkeit sowie durch eine hohe Wirksamkeit sowohl bezüglich des sofortigen Schaumzerfalls als auch der Langzeitwirkung aus.

Die erfindungsgemäßen Entschäumerformulierungen haben den Vorteil, dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Dynamische Viskositäten wurden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe (angegeben in mPas) stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

Kinematische Viskositäten werden mittels eines Viskositäts-Messsystem ViscoSystem® AVS 350 der Fa. Schott unter Verwendung von Ubbelohde Viskosimeterrohren mit Konstante (z.B. der Fa. Windaus oder Fa. VWR) nach DIN 51562-Teil 1 oder ISO/DIS 3105 (einschließlich deren Kalibrierung) bestimmt. Die Messungen erfolgen bei einer Temperatur von 25,0 °C (+- 0,1 °C). Die Viskositätsangabe (angegeben in mm²/s) stellt den arithmetischen Mittelwert von drei unabhängig durchgeführten Einzelmessungen dar: Die Messunsicherheit der kinematischen Viskosität beträgt 1,05 %. Abhängig vom Messbereich werden unterschiedliche Viskosimeterrohre mit entsprechenden Richtkonstanten verwendet:

| Messbereich | Kapillar-Nr. | Richtkonstante |
|---|---|---|
| 0,5 - 3 mm²/s | 0c | 0,003 K |
| 0,8 - 5 mm²/s | 0a | 0,005 K |
| 1,2 - 10 mm²/s | I | 0,01 K |
| 3 - 30 mm²/s | Ic | 0,03 K |
| 10 - 100 mm²/s | II | 0,10 K |
| 30 - 300 mm²/s | IIc | 0,30 K |
| 100 - 1000 mm²/s | III | 1 K |
| 300 - 3000 mm²/s | IIIc | 3 K |
| 1000 - 10000 mm²/s | IV | 10 K |

Angabe des Messbereichs, der entsprechenden Kapillar-Nr. sowie der Konstante nach VWR-Laborkatalog, 2011-2013, S. 645.8.
¹H-NMR-Spektren werden als Lösung in CDCl₃ an einem Bruker Avance III HD-NMR-Spektrometer (5 mm Breitbandprobenkopf mit ATMA und Z-Gradient) mit einer Messfrequenz von 500,13 MHz aufgenommen.
²⁹Si-NMR-Spektren werden als Lösung in C₆D₆-Toluol an einem Bruker Avance III HD-NMR-Spektrometer (5 mm Breitbandprobenkopf mit ATMA und Z-Gradient) mit einer Messfrequenz von 90,34 MHz aufgenommen.

Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8 - NMR spectroscopy of organosilicon compounds", Elizabeth A. Williams, The Chemistry of Organic Silicon Compounds, 1989 John Wiley and Sons Ltd, 511-533.

Die Jodzahlbestimmung nach Wijs erfolgt nach DIN 53241-1:1995-05. Die Jodzahl ist definiert durch die Menge an Gramm Jod, die von 100 g Substanz gebunden wird. Die Jodierung der in der Substanz enthaltenen Doppelbindungen und die Rücktitration mittels Natriumthiosulfatlösung des unverbrauchten Jods ergibt eine Maßzahl für den Grad des Olefingehaltes; es ist zu beachten, dass die Bestimmung auch den Wasserstoff, der an Silizium gebunden ist, erfasst.

### Beispiele 1:

### Herstellung der Organosiliciumverbindungen (A):

a) Organosiliciumverbindung **A1:**
   In einem 500 ml Dreihalskolben werden 101,0 g eines Äquilibrats aus Dimethylsiloxy- und Vinyldimethylsiloxyeinheiten mit der Jodzahl 22,0 mit 2,7 g eines Hydrolysats aus Hydrogenmethyldichlorsilan, das mit Trimethylsiloxyeinheiten terminiert ist und eine Kettenlänge von ca. 55 Si-Einheiten hat, 120,0 g eines OH-terminierten Polydimethylsiloxans der Viskosität 62 mm²/s (25,0°C; Kapillar-Nr. II) sowie 28,6 g eines Äquilibrats aus Dimethylsiloxy- und Trimethylsiloxyaneinheiten der Viskosität 35 mm2/s (25,0°C; Kapillar-Nr. II) bei 120°C und einem verminderten Druck von 20 mbar mit 250 ppm PNCl₂ für zwei Stunden äquilibriert. Der Katalysator wird durch Zugabe von NaHCO₃ desaktiviert. Nach Filtration und dem Entfernen flüchtiger Bestandteile bei 160°C und 40 mbar vermindertem Druck erhält man ein Polysiloxan **A1** der Viskosität 81 mm²/s (25,0°C; Kapillar-Nr. II), einer Jodzahl von 13,3 sowie einen H-Gehalt von 0,016 Gew.-%. Die ²⁹Si-NMR-Bestimmung ergibt einen Gehalt an Dimethylsiloxy-Einheiten (entspricht Index x) von 52.
b) Organosiliciumverbindung **A2:**
   In einem 4-Liter-Dreihalskolben werden 197 g 1,3-Divinyltetramethyldisiloxan mit 75 g eines Hydrolysats aus Hydrogenmethyldichlorsilan, das mit Trimethylsiloxyeinheiten terminiert ist und eine Kettenlänge von ca. 55 Si-Einheiten hat, 2745 g Octamethylcyclotetrasiloxan sowie 55 g Hexamethyldisiloxan bei 120°C mit 200 ppm PNCl₂ für 2,5 Stunden äquilibriert. Der Katalysator wird durch Zugabe von MgO desaktiviert. Nach Filtration und dem Entfernen flüchtiger Bestandteile bei 135°C und 10 mbar vermindertem Druck erhält man ein Polysiloxan **A2** der Viskosität 23 mm²/s (25,0°C; Kapillar-Nr. II), einer Jodzahl von 26,6 sowie einen H-Gehalt von 0,038 Gew.-%. Die ²⁹Si-NMR-Bestimmung ergibt einen Gehalt an Dimethylsiloxy-Einheiten (entspricht Index x) von 26.
c) Organosiliciumverbindung **A3:**
   In einem 1000 ml Dreihalskolben werden 497,4 g eines Äquilibrats aus Dimethylsiloxy- und Vinyldimethylsiloxyeinheiten mit der Jodzahl 24,7 mit 17,1 g eines Hydrolysats aus Hydrogenmethyldichlorsilan, das mit Trimethylsiloxyeinheiten terminiert ist und eine Kettenlänge von ca. 55 Si-Einheiten hat sowie 192,0 g eines Äquilibrats aus Dimethylsiloxy- und Trimethylsiloxyaneinheiten der Viskosität 34 mm²/s (25,0°C; Kapillar-Nr. II) bei 120°C mit 200 ppm PNCl₂ für zwei Stunden äquilibriert. Der Katalysator wird durch Zugabe von MgO desaktiviert. Nach Filtration erhält man ein Polysiloxan **A3** der Viskosität 24 mm²/s (25,0°C; Kapillar-Nr. II), einer Jodzahl von 25,7 sowie einen H-Gehalt von 0,037 Gew.%. Flüchtige Bestandteile verbleiben im Produkt. Für analytische Zwecke wurde eine kleine Menge des erhaltenen Produkts bei 135°C und 10 mbar vermindertem Druck von flüchtigen Bestandteilen befreit. Die ²⁹Si-NMR-Bestimmung dieser analytischen Probe ergibt einen Gehalt an Dimethylsiloxy-Einheiten (entspricht Index x) von 27.
d) Organosiliciumverbindung **VA4:**
   In einem 1000 ml Dreihalskolben werden 164,0 g eines Äquilibrats aus Dimethylsiloxy- und Vinyldimethylsiloxyeinheiten mit der Jodzahl 25,0 mit 4,8 g eines Hydrolysats aus Hydrogenmethyldichlorsilan, das mit Trimethylsiloxyeinheiten terminiert ist und eine Kettenlänge von ca. 55 Si-Einheiten hat, 676,0 g Octamethylcyclotetrasiloxan sowie 46,5 g eines Äquilibrats aus Dimethylsiloxy- und Trimethylsiloxyaneinheiten der Viskosität 34 mm²/s (25,0°C; Kapillar-Nr. II) bei 120°C mit 250 ppm PNCl₂ für zwei Stunden äquilibriert. Der Katalysator wird durch Zugabe von MgO desaktiviert. Nach Filtration erhält man ein Polysiloxan **VA4** der Viskosität 163 mm²/s (25,0°C; Kapillar-Nr. IIc), einer Jodzahl von 4,6 sowie einen H-Gehalt von 0,008 Gew.-%. Flüchtige Bestandteile verbleiben im Produkt. Für analytische Zwecke wurde eine kleine Menge des erhaltenen Produkts bei 135°C und 10 mbar vermindertem Druck von flüchtigen Bestandteilen befreit. Die ²⁹Si-NMR-Bestimmung dieser analytischen Probe ergibt einen Gehalt an Dimethylsiloxy-Einheiten (entspricht Index x) von 117.

### Beispiele 2:

### Herstellung der Organopolysiloxane (1):

a) Organopolysiloxan **(1-1):**
   In einem 250 ml Dreihalskolben werden 100,0 g des Polysiloxans **A1** gelöst in 50 ml Xylol zusammen mit 0,2 g einer toluolischen Lösung des Karstedt-Pt-Katalysators (Pt-Gehalt: 0,3 Gew.%) für 3,5 h auf 90°C erhitzt. Während des abschließenden Abkühlens werden 0,3 g Diallylmaleinat hinzugegeben. Das Xylol wird bei 90°C und unter vermindertem Druck von 32 mbar entfernt. Man erhält ein Polysiloxan **(1-1)** der Viskosität 425 mPa.s (gemessen bei 25°C und einer Scherrate von 1 1/s). Zur Herstellung von Organopolysiloxan **(1-1)** wird somit ausschließlich Polysiloxan **A1** verwendet, so dass als überwiegende Komponente Strukturelement (IV) mit x=52 enthalten ist. **(1-1)** liegt als fließfähige Verbindung vor, die nicht zur Vergelung neigt. Ein inertes Lösemittel muss somit nicht verwendet werden.
b) Organopolysiloxan **(1-2)**:
   In einem 250 ml Dreihalskolben werden 100,0 g der Polysiloxan **A2** zusammen mit 55,0 g eines linearen Vinyldimethylsilyl-terminierten Polydimethylsiloxan der Iodzahl 1,99 zusammen mit 0,08 g einer Lösung des Karstedt-Pt-Katalysators in linearem Vinyldimethylsilyl-terminierten Polydimethylsiloxan (Pt-Gehalt: 1,0 Gew.%) langsam auf 135°C erhitzt und eine Stunde bei dieser Temperatur belassen. Nach Abkühlen erhält man ein Organopolysiloxan **(1-2)** der Viskosität 2020 mPa.s (gemessen bei 25°C und einer Scherrate von 1 1/s).
   Zur Herstellung von Organopolysiloxan **(1-2)** wird Polysiloxan **A2** im großen Überschuss verwendet, so dass zu einem überwiegenden Teil Strukturelement (IV) mit x=26 enthalten ist. Das Verhältnis von Vinyl zu Si-H liegt bei 2,37. Das lineare Vinyldimethylsilyl-terminierte Polydimethylsiloxan (Komponente (B)) ist somit zu einem überwiegenden Anteil einreagiert und liegt somit in einem minimalen Überschuss vor. Dennoch liegt **(1-2)** als fließfähige Verbindung vor, die nicht zur Vergelung neigt.
c) Organopolysiloxan **(1-3):**
   In einem 500 ml Dreihalskolben werden 150,0 g der Polysiloxan **A3** zusammen mit 30,0 g eines Äquilibrats aus Dimethylsiloxy- und Vinyldimethylsiloxyeinheiten mit der Iodzahl 6,6 zusammen mit 0,09 g einer Lösung des Karstedt-Pt-Katalysators in linearem Vinyldimethylsilyl-terminierten Polydimethylsiloxan (Pt-Gehalt: 1,0 Gew.%) langsam auf 90°C erhitzt und zwei Stunden bei dieser Temperatur belassen. Nach Abkühlen werden bei 130°C und bei einem verminderten Druck von 10 mbar flüchtige Bestandteile entfernt, so dass man ein Organopolysiloxan **(1-3)** der Viskosität 1692 mPa.s (gemessen bei 25°C und
   einer Scherrate von 1 1/s) erhält.
   Auch zur Herstellung von Organopolysiloxan **(1-3)** wird Polysiloxan **A3** im großen Überschuss verwendet, so dass zu einem überwiegenden Teil Strukturelement (IV) mit x=27 enthalten ist. Das Verhältnis von Vinyl zu Si-H liegt bei 1,87. Das lineare Vinyldimethylsilyl-terminierte Polydimethylsiloxan (Komponente (B)) ist somit ebenfalls zu einem überwiegenden Anteil einreagiert und liegt somit ebenfalls in einem minimalen Überschuss vor. Dennoch liegt **(1-3)** als fließfähige Verbindung vor, die nicht zur Vergelung neigt.
d) Organopolysiloxan **V(1-4)** (nicht erfindungsgemäß):
   In einem 500 ml Dreihalskolben werden 180,0 g der Polysiloxan VA4 zusammen mit 36,0 g eines Äquilibrats aus Dimethylsiloxy- und Vinyldimethylsiloxyeinheiten mit der Iodzahl 6,6 zusammen mit 0,09 g einer Lösung des Karstedt-Pt-Katalysators in linearem Vinyldimethylsilyl-terminierten Polydimethylsiloxan (Pt-Gehalt: 1,0 Gew.%) langsam auf 90°C erhitzt und zwei Stunden bei dieser Temperatur belassen. Nach Abkühlen werden bei 130°C und bei einem verminderten Druck von 10 mbar flüchtige Bestandteile entfernt, so dass man ein Organopolysiloxan **V(1-4)** der Viskosität 3617 mPa.s (gemessen bei 25°C und einer Scherrate von 1 1/s) erhält.

Zur Herstellung von Organopolysiloxan **V(1-4)** wird Polysiloxan **VA4** im großen Überschuss verwendet, so dass zu einem überwiegenden Teil das Strukturelement (IV) mit x=117 enthalten ist. Das Verhältnis von Vinyl zu Si-H liegt bei 2,61. Das lineare Vinyldimethylsilyl-terminierte Polydimethylsiloxan (Komponente (B)) ist somit ebenfalls zu einem überwiegenden Anteil einreagiert und liegt somit ebenfalls in einem minimalen Überschuss vor.

### Herstellung der Vergleichsbeispiele V2a ,V2b und V2c:

a) Herstellung eines über die Struktureinheit O_{2/2}RSi-Y-SiR₂O_{1/2} verbrückten Organopolysiloxans **(V2a)**(nicht erfindungsgemäß):
   In einem 1000 ml Dreihalskolben werden 24,5 g einer Organosiliciumverbindung der Zusammensetzung Me₃Si-(OSiMe₂)₃₁₀-(OSiHMe)₁₄-OSiMe₃ (70 Gew.-%ige Lösung in Mineralöl) zusammen mit 482,1 g eines Äquilibrats aus Dimethylsiloxy- und Vinyldimethylsiloxyeinheiten mit einem Vinyl-Gehalt von 0,89 mol-% und einem Trimethylsilyl-terminierten Polydimethylsiloxan der Viskosität 200 mm²/s (25,0°C; Kapillar-Nr. IIc) vorgelegt. Das Verhältnis von Vinylzu Si-H-Gruppen beträgt 6,5:1. Es werden 0,45 g einer Lösung des Karstedt-Pt-Katalysators in linearem Vinyldimethylsilyl-terminierten Polydimethylsiloxan (Pt-Gehalt: 1,0 Gew.%) hinzugefügt und die Reaktionsmischung wird langsam auf 80°C erhitzt und zwei Stunden bei dieser Temperatur belassen. Nach Abkühlen wird ein Organopolysiloxan **V2a** der Viskosität 4280 mPa.s (gemessen bei 25°C und einer Scherrate von 25 1/s) erhalten.
   Aufgrund des Verhältnisses von Vinyl- zu Si-Gruppen liegt ein Großteil des eingesetzten Äquilibrats aus Dimethylsiloxy- und Vinyldimethylsiloxyeinheiten weiterhin unreagiert (als Lösemittel) vor. Ferner ist mit dem Mineralöl wie auch dem Trimethylsilyl-terminierten Polydimethylsiloxan ein inertes Lösemittel vorhanden, wodurch eine Gelierung verhindert wird.
b) Herstellung eines über die Struktureinheit O_{2/2}RSi-Y-SiR₂O_{1/2} verbrückten Organopolysiloxans (**V2b)** gemäß EP 434 060 B2 (nicht erfindungsgemäß):
   In einem 2-Liter-Dreihalskolben werden 7,3 g einer Organosiliciumverbindung der Zusammensetzung Me₃Si-(OSiMe₂)₄-(OSiHMe)₄-OSiMe₃ zusammen mit 900,0 g eines Äquilibrats aus Dimethylsiloxy- und Vinyldimethylsiloxyeinheiten mit einem Vinyl-Gehalt von 1,23 mol-% vorgelegt. Das Verhältnis von Vinyl- zu Si-H-Gruppen beträgt 3,4:1. Es werden 0,28 g einer Lösung des Karstedt-Pt-Katalysators in linearem Vinyldimethylsilyl-terminierten Polydimethylsiloxan (Pt-Gehalt: 1,0 Gew.%) hinzugefügt und die Reaktionsmischung wird langsam auf 80°C erhitzt und eine Stunde bei dieser Temperatur belassen. Nach Abkühlen wird ein Organopolysiloxan **V2b** der Viskosität 7000 mm²/s (25,0°C; Kapillar-Nr. IV) erhalten. Aufgrund des Verhältnisses von Vinyl- zu Si-Gruppen liegt ein Großteil des eingesetzten Äquilibrats aus Dimethylsiloxy- und Vinyldimethylsiloxyeinheiten weiterhin unreagiert (als Lösemittel) vor, wodurch die Gelierung verhindert wird. Wird das Vinyl- zu Si-H-Gruppen Verhältnis auf 3,0:1 verringert (entspricht 3,3 g der obigen Organosiliciumverbindung der Zusammensetzung Me₃Si-(OSiMe₂)₄-(OSiHMe)₄-OSiMe₃ und 362,1 g des obigen Äquilibrats aus Dimethylsiloxy- und Vinyldimethylsiloxyeinheiten), so führt die Reaktion unter den dargestellten Bedingungen zu einem vergelten, nicht mehr handhabbaren Produkt.
c) Herstellung eines über die Struktureinheit O_{2/2}RSi-Y-SiR₂O_{1/2} verbrückten Organopolysiloxans (**V2c)** gemäß EP 217 501 A2 (nicht erfindungsgemäß):
   In einem 1000 ml Dreihalskolben werden 163,9 g eines Hydroxydimethylsilyl-terminierten Polydimethylsiloxans der Viskosität 5790 mPa.s (gemessen bei 25°C und einer Scherrate von 25 1/s), 18,6 g eines Siliconharzes bestehend aus (nach ²⁹Si-NMR und IR-Analyse) 40 mol-% CH₃SiO_{1/2}-, 50 mol-% SiO_{4/2}-, 8 mol-% C₂H₅OSiO_{3/2}- und 2 mol-% HOSiO_{3/2}-Einheiten sowie 544, 2 g eines Trimethylsilyl-terminierten Polydimethylsiloxans der Viskosität 344 mm²/s (25,0°C; Kapillar-Nr. III) vorgelegt. Die Reaktionsmischung wird langsam auf 80°C erhitzt und mit 1,24 g einer 80 Gew.-%igen Lösung an KOH in Methanol versetzt. Es wird weiter auf 100°C aufgeheizt und drei Stunden bei dieser Temperatur belassen. Durch Hinzufügen von 0,33 g Essigsäure (80%ig) und Abkühlen wird ein Organopolysiloxan **V2c** der Viskosität 1860 mm²/s (25,0°C; Kapillar-Nr. IIIc) erhalten. Da das Produkt ca. 73 Gew-% eines Trimethylsilyl-terminierten Polydimethylsiloxans als Lösemittel enthält, wird ein noch fließfähiges Produkt enthalten.

### Beispiele 3:

### Herstellung der erfindungsgemäßen Entschäumerformulierungen C1-C4 mit den Organopolysiloxanen (1) und Herstellung der nicht erfindungsgemäßen Entschäumerformulierungen VC5-VC9:

Zur Herstellung der Entschäumerformulierungen wurden die in der Tabelle 1 beschriebenen Stoffe mit einem Dissolver vermischt und in Gegenwart von 1500 ppm KOH (als 20%ige Lösung in Methanol) 4 Stunden auf 150°C erhitzt und nach Abkühlen nochmals mit dem Dissolver homogenisiert.

**Tabelle 1: Zusammensetzung der Entschäumerformulierungen**

| Beisp.bzw. Vergl. | Komponente **(1)** Teile | Komponente **(2)** Teile | Komponente **(3)** Teile | Komponente **(4)** Teile | Komponenten **(5)/(6)** Teile |
|---|---|---|---|---|---|
| **C1** | 74,3 **(1-1)** | 5,0 **D1** | 4,0 **E1** | 16,0 **F1** | 0,7 **G1** |
| **C2** | 74,3 **(1-2)** | 5,0 **D1** | 4, 0 **E1** | 16,0 **F1** | 0,7 **G1** |
| **C3** | 74,3 **(1-3)** | 5,0 **D1** | 4, 0 **E1** | 16,0 **F1** | 0,7 **G1** |
| **C4** | 74,3 **(1-2)** | 5,0 **D1** | 4, 0 **E1** | 16,0 **F1** | 0,7 **G1** 4, 0 **G2** |
| **VC5** (nicht erfindungsgemäß) | 74,3 **V (1-4)** | 5, 0 **D1** | 4, 0 **E1** | 16,0 **F1** | 0,7 **G1** |
| **VC6 ¹⁾** (nicht erfindungsgemäß) | 74,3 **V2a** | 5,0 **D1** | 4, 0 **E1** | 16,0 **F1** | 0,7 **G1** |
| **VC7 ²⁾** (nicht erfindungsgemäß) | 82,4 **V2b** | 4,9 **D1** | 4,9 **E1** | 7,4 **F1** | 0,4 **G1** |
| **VC8 ³⁾** (nicht erfindungsgemäß) | - | 5, 0 **D1** | 4, 0 **E1** | 16,0 **F1** 64,3 **F2** 10,0 **F3** | 0,7 **G1** |
| **VC9 ⁴⁾** (nicht erfindungsgemäß) | 82,4 **V2c** | 4,9 **D1** | 4,9 **E1** | 7,4 **F1** | 0,4 **G1** |

| | | | | | |
|---|---|---|---|---|---|
| **¹⁾**Vergleichsversuch VC6 gemäß EP 516 109 A1 **²⁾**Vergleichsversuch VC7 gemäß EP 434 060 B2 **³⁾**Vergleichsversuch VC8 gemäß WO 2011/069868 A2 **⁴⁾**Vergleichsversuch VC9 gemäß EP 217 501 A2 | | | | | |

### Verwendete Stoffe:

D1: Eine hydrophile pyrogene Kieselsäure mit einer BET-Oberfläche von 300 m²/g (erhältlich bei der Wacker Chemie AG, Deutschland unter der Bezeichnung HDK® T30)
E1: Ein bei Raumtemperatur festes Siliconharz bestehend aus (nach ²⁹Si-NMR und IR-Analyse) 40 mol-% (CH₃)₃SiO_{1/2}-, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol (bezogen auf Polystyrolstandard)
F1: Ein mit Trimethylsiloxangruppen terminiertes Polydimethylsiloxan mit einer Viskosität von 0,0001 m²/s
F2: Ein mit Trimethylsiloxangruppen terminiertes Polydimethylsiloxan mit einer Viskosität von 0,008 m²/s
F3: Ein mit Trimethylsiloxangruppen terminiertes Polydimethylsiloxan mit einer Viskosität von 15,0 m²/s
G1: Eine 20%ige methanolische Lösung an KOH,
G2: Ein Polyether-modifiziertes Silicon-Copolymer der Struktur (H₃C)₃Si-[Si(CH₃)₂O]ᵤ-[GSi(CH₃)O)ᵥ-Si(CH₃)₃ mit G = (CH₂)₃-(O-CH₂CH₂)_{w}-(O-CH(CH₃)-CH₂)ₓ-OH,
   wobei u, v, w und x so gewählt werden, dass das Polymer eine Viskosität von 1100 mPa·s und einen Trübungspunkt (nach DIN EN 1890) von 25°C aufweist.

### Beispiele 4:

### Rheologische Charakterisierung der erfindungsgemäßen Entschäumerformulierungen C1-C4 mit den Organopolysiloxanen (1) und den nicht erfindungsgemäßen Entschäumerformulierungen VC5-VC9:

Die rheologische Charakterisierung der Entschäumerformulierungen erfolgt im Allgemeinen unter Bedingungen, wie sie in DIN 53019-4 beschrieben sind.

Insbesondere erfolgt die Charakterisierung mit Hilfe einer Oszillationsmessung mittels Kreisfrequenzvorgabe an einem luftgelagerten Rotationsrheometer der Fa. Anton Paar (Rheometer MCR 301) samt angeschlossenem Thermostaten (bei einer Temperatur von 25°C). Als Messelement wird ein Kegel/Platte-System mit einem Durchmesser von 50 mm und 2° Winkel (Messkegel CP50-2 der Fa. Paar) verwendet. Die Probenmenge von 1,6 ml wird mittels Spritze aufgetragen. Die Messung erfolgt bei einer Deformation von 1%. Die Kreisfrequenz wir im Bereich von 100 rad/s bis 1 rad/s logarithmisch durchfahren, wobei 11 Messpunkte MP (Steigung = 5 MP/Dekade) aufgenommen werden.

Die Auswertung erfolgt automatisch Software-unterstützt (unter Verwendung der Auswertesoftware RHEOPLUS32/Multi32 V3), wobei einerseits der Verlustfaktor (tan delta) (Quotient aus Verlustmodul und Speichermodul) bei einer Kreisfrequenz von 100 rad/s und die Viskosität bei einer Kreisfrequenz von 100 rad/s bestimmt wird.
Andererseits wird der Verlustfaktor über den gesamten Frequenzbereich zwischen 1 rad/s und 100 rad/s betrachtet und die Differenz aus dem maximalen Verlustfaktor und dem minimalen Verlustfaktor als Δ tan delta bestimmt.

**Tabelle 2: Rheologie der Entschäumerformulierungen**

| Beisp. bzw. Vergl. | Verlustfaktor (tan delta) bei 100 rad/s | Δ tan delta | Viskosität (mPas) bei 100 rad/s |
|---|---|---|---|
| **C1** | 1,83 | 0,23 | 6980 |
| **C2** | 1,83 | 0,35 | 5060 |
| **C3** | 1,73 | 0,08 | 5390 |
| **C4** | 1,65 | 0,11 | 24890 |
| **VC5** (nicht erfindungsgemäß) | 2,94 | 1,8 | 7560 |
| **VC6 ¹⁾** (nicht erfindungsgemäß) | 3,01 | 2,0 | 2300 |
| **VC7 ²⁾** (nicht erfindungsgemäß) | 2,66 | 2,84 | 8700 |
| **VC8 ³⁾** (nicht erfindungsgemäß) | 1,76 | 2,72 | 40100 |
| **VC9 ⁴⁾** (nicht erfindungsgemäß) | 2,55 | 5,27 | 10200 |

| | | | |
|---|---|---|---|
| **¹⁾**Vergleichsversuch VC6 gemäß EP 516 109 A1 **²⁾**Vergleichsversuch VC7 gemäß EP 434 060 B2 **³⁾**Vergleichsversuch VC8 gemäß WO 2011/069868 A2 **⁴⁾**Vergleichsversuch VC9 gemäß EP 217 501 A2 | | | |

Die Entschäumerformulierungen **C1** bis **C4**, die unter Verwendung der erfindungsgemäßen Organopolysiloxane (1) hergestellt wurden, zeigen einen niedrigen Verlustfaktor (tan delta), der auch über den gesamten betrachteten Frequenzbereich niedrig ist.

Dieser niedrige Verlustfaktor ist eine Konsequenz der höheren Netzpunktdichte, was durch die Kettenlänge des Strukturelements (IV) mit x < 100 gewährleistet wird.

Gleichzeitig zeigen alle Entschäumerformulierung eine sehr gute Fließfähigkeit (niedrige Viskosität), obwohl auf die Verwendung eines Lösemittels verzichtet wurde.
So können die Entschäumerformulierungen, trotz des niedrigen Verlustfaktors, als solche gehandhabt werden und müssen nicht, wie beispielsweise in EP 0 499 364 A1 in eine emulgierte Form überführt werden.

Ist die Netzpunktdichte erniedrigt, wie in der nicht-erfindungsgemäßen Entschäumerformulierung **VC5** (x = 117), so erhöht sich auch der Verlustfaktor wie auch die Frequenzabhängigkeit des Verlustfaktors (Δ tan delta > 1,5).

Betrachtet man die (nicht-erfindungsgemäßen) Entschäumerformulierungen **VC6**, **VC7** und **VC9** auf Basis von Organopolysiloxanen, die in Gegenwart eines hohen Überschusses der Vinyl-Komponente (als Lösemittel) oder in Gegenwart einer großen Mengen an inertem Organopolysiloxan hergestellt werden (damit die Fließfähigkeit erhalten bleibt), so ist der Einfluss auf den Verlustfaktor sehr deutlich zu erkennen. Insbesondere die Frequenzabhängigkeit des Verlustfaktors (Δ tan delta) steigt sehr deutlich an.

Die (nicht erfindungsgemäße) Entschäumerformulierung **VC8**, bei der durch Verwendung eines Organopolysiloxans einer sehr hohen Viskosität ein elastisches Moment erzielt werden soll, zeigt ebenfalls die hohe Frequenzabhängigkeit des Verlustfaktors.

### Beispiele 5:

### Prüfung der Entschäumerwirksamkeit der erfindungsgemäßen Entschäumerformulierungen C1-C4 mit den Organopolysiloxanen (1) und der nicht erfindungsgemäßen Entschäumerformulierungen VC5-VC9 in der Schwarzablaugen-Entschäumung:

Die so erhaltenen erfindungsgemäßen und nicht erfindungsgemäßen Entschäumerformulierungen wurden hinsichtlich des Tests in der Schwarzlauge überprüft. Die Ergebnisse dieser Tests sind in den Tabellen 3 - 6 zusammengefasst.

Zur besseren (genaueren) Dosierung wurde eine Mischung aus 40 Teilen der in Tabelle 1 genannten Entschäumerformulierungen und 60 Teilen eines Gemisches aus aliphatischen Kohlenwasserstoffen mit einer Viskosität von 3 mm²/s und einem Flammpunkt > 100°C mit einem Labordissolver bei 1.000 min⁻¹ hergestellt.

400 ml Schwarzablauge aus dem Zellstoffprozess werde in einer auf 80°C thermostatisierten 1000 ml Umpumpapparatur mit einer Umpumpgeschwindigkeit von 1,5 l/min umgepumpt. Sobald das Schaumniveau eine Höhe von 75 mm erreicht hat, wird der Entschäumer zudosiert, Schaumzerfallszeit und das niedrigste Schaumniveau, das nach Zugabe von Entschäumer und einsetzendem Schaumzerfall erreicht wird, werden festgehalten.
Je kleiner die Schaumzerfallszeit t1 und je niedriger das Schaumniveau h1 sind, desto besser ist die Schnellwirkung eines Entschäumers.
Danach wird die Langzeitwirkung des Entschäumers bestimmt, welche die Zeitspanne t2 darstellt, die benötigt wird, um vom niedrigsten Schaumniveau zum ursprünglichen Schaumniveau (75 mm) zu kommen.

**Tabelle 3: Ergebnisse der Prüfung der Entschäumerwirksamkeit an Schwarzablauge aus dem Zellstoffprozess (Hardwood der Fa. UPM Kymmene Oy aus Kuusankoski, Finnland) Dosierung: 5 µl der oben hergestellten Mischung aus Entschäumerformulierung und Kohlenwasserstoffgemisch**

| Beisp. bzw. Vergl. | Schaumzerfallszeit t1 in [s] | Schaumniveau nach Schaumzerfall [mm] | Langzeitwirkung t2 in [s] |
|---|---|---|---|
| **C1** | 20 | 19 | 895 |
| **C2** | 17 | 18 | 919 |
| **VC7 ¹⁾** | 27 | 24 | 344 |

| | | | |
|---|---|---|---|
| ¹⁾Vergleichsversuch **VC7** gemäß EP 434 060 B2 | | | |

Die erfindungsgemäßen Beispiele haben in dieser Prüfung auf die Entschäumung von Hardwood-Schwarzablauge gegenüber der Vergleichsformulierung **VC7** eine kürzere Schaumzerfallszeit bei gleicher Schaumhöhe wie auch eine bessere Langzeitwirkung als die nach dem Stand der Technik hergestellten Formulierungen.

Diese überlegene Entschäumerwirkung tritt sowohl in Beispiel **C1** wie auch **C2** auf; beide Entschäumer weisen einen niedrigen Verlustfaktor (bei 100 rad/s) und vor allem einen nahezu Frequenz-unabhängigen Verlustfaktor (Δ tan delta < 1,5) auf. Vergleichsbeispiel **VC7** mit einem Δ tan delta von 2,84 weist eine deutlich schlechtere Entschäumerwirkung auf, ein Resultat der Verwendung der Vinylkomponente im Überschuss.

**Tabelle 4: Ergebnisse der Prüfung der Entschäumerwirksamkeit an Schwarzablauge aus dem Zellstoffprozess (Softwood der Fa. UPM Kymmene Oy aus Kuusankoski, Finnland) Dosierung: 7,5 µl der oben hergestellten Mischung aus Entschäumerformulierung und Kohlenwasserstoffgemisch**

| Beisp. bzw. Vergl. | Schaumzerfallszeit t1 in [s] | Schaumniveau nach Schaumzerfall [mm] | Langzeitwirkung t2 in [s] |
|---|---|---|---|
| **C1** | 10 | 23 | 368 |
| **C3** | 14 | 22 | 338 |
| **VC7 ¹⁾** | 12 | 34 | 137 |

| | | | |
|---|---|---|---|
| **¹⁾**Vergleichsversuch **VC7** gemäß EP 434 060 B2 | | | |

In der Entschäumung von Softwood-Schwarzlauge zeigt sich das gleiche Bild. Auch hier zeigen sich die erfindungsgemäßen Entschäumer **C1** und **C3** mit niedrigem Verlustfaktor (tan delta) und niedrigem Δ tan delta dem Vergleichsbeispiel **VC7** überlegen.

**Tabelle 5: Ergebnisse der Prüfung der Entschäumerwirksamkeit in einer weiteren Schwarzablauge aus dem Zellstoffprozess (Hardwood der Fa. UPM Kymmene Oy aus Kuusankoski, Finnland) Dosierung: 3 µl der oben hergestellten Mischung aus Entschäumerformulierung und Kohlenwasserstoffgemisch**

| Beisp. bzw. Vergl. | Schaumzerfallszeit t1 in [s] | Schaumniveau nach Schaumzerfall [mm] | Langzeitwirkung t2 in [s] |
|---|---|---|---|
| **VC5** | 21 | 23 | 438 |
| **VC6 ¹⁾** | 18 | 28 | 170 |
| **VC7 ²⁾** | 19 | 27 | 234 |
| **VC8 ³⁾** | 12 | 29 | 73 |
| **C1** | 18 | 20 | 1212 |

| | | | |
|---|---|---|---|
| **¹⁾**Vergleichsversuch VC6 gemäß EP 516 109 A1 **²⁾**Vergleichsversuch VC7 gemäß EP 434 060 B2 **³⁾**Vergleichsversuch VC8 gemäß WO 2011/069868 A2 | | | |

In dieser Testreihe zeigen sich zwei Aspekte.
Der Vergleich zwischen **VC5** (nicht erfindungsgemäß) und **C1** verdeutlicht den Einfluss der Dichte an Knotenpunkten auf den Verlustfaktor (tan delta) bzw. den Δ tan delta (2,94 und 1,8 bei **VC5** mit x = 117 vs. 1,83 und 0,23 bei **C1** mit x = 52). Die höhere Dichte an Knotenpunkten führt auch zu einer deutlich besseren Entschäumerwirkung insbesondere in der Langzeitwirkung.

Der Vergleich zwischen **VC6, VC7** (jeweils nicht erfindungsgemäß) und **C1** zeigt den Einfluss an verwendetem Lösemittel bzw. an überschüssig verwendeter Vinyl-Komponente auf den Verlustfaktor (tan delta) bzw. den Δ tan delta:
- **C1** (kein Überschuss an Vinylkomponente):
   tan delta= 1,83; Δ tan delta = 0,23,
- **VC6** (Verhältnis der Vinyl- : Si-H-Gruppen = 6,8:1 und Verwendung des inerten Polysiloxans als Lösemittel):
   tan delta = 3,01; Δ tan delta = 2,0,
- **VC7** (Verhältnis der Vinyl- : Si-H-Gruppen = 3,4:1):
   tan delta = 2,66; Δ tan delta = 2,84.

Auch hier zeigt sich eine deutlich verbesserte Langzeit-Entschäumerwirkung.

### Herstellung von (erfindungsgemäßen) Emulsionen F1 und F2 der (erfindungsgemäßen) Entschäumerformulierung C2 und C4 sowie der (nicht erfindungsgemäßen) Emulsionen VF3 und VF4 der (nicht erfindungsgemäßen) Entschäumerformulierungen VC7 und VC9:

Zur Herstellung der Emulsionen **F1** und **F2** sowie **VF3** und **VF4** (Vergleichsbeispiele) werden 15 Teile der Entschäumerformulierung **C2, C4, VC7** oder **VC9,** 2 Teile Sorbitanmonostearat (käufliche erhältlich bei der Fa. Croda unter dem Namen Span 60), 2 Teile Polyoxyethylen(40)stearat (käufliche erhältlich bei der Fa. Kolb unter dem Namen Sympatens-BS/400 G), und 3,2 Teile des Polyether-modifizierten Silicon-Copolymers G2 bei 70°C vermischt. 50 Teile einer 1%igen wässrigen Lösung an Natrium Carboxymethylcellulose (käufliche erhältlich bei der Fa. Dow unter dem Namen Walocel CRT 30000) werden mit einem Flügelrührer bei 600 U/min eingerührt. Innerhalb von 3 Minuten wurden portionsweise 27 Teile Wasser zugegeben und 15 min bei 1.000 U/min nachgerührt.

**Tabelle 6: Ergebnisse der Prüfung der Entschäumerwirksamkeit an Schwarzablauge aus dem Zellstoffprozess (Softwood der Fa. UPM Kymmene Oy aus Kuusankoski, Finnland) Dosierung: 5 µl der hergestellten Emulsionen**

| Emulsionen | Beisp. bzw. Vergl. | Schaumzerfallszeit t1 in [s] | Schaumniveau nach Schaumzerfall [mm] | Langzeitwirkung t2 in [s] |
|---|---|---|---|---|
| **F1** | **C2** | 13 | 15 | 341 |
| **F2** | **C4** | 19 | 18 | 543 |
| **VF3** | **VC7** ¹⁾ | 20 | 14 | 143 |
| **VF5** | **VC9** ⁴⁾ | 22 | 20 | 281 |

| | | | | |
|---|---|---|---|---|
| ¹⁾Vergleichsversuch **VC7** gemäß EP 434 060 B2 ⁴⁾Vergleichsversuch **VC9** gemäß EP 217 501 A2 | | | | |

Formulierung der erfindungsgemäßen Entschäumer als Emulsion führt zu analogen Ergebnissen bei der Entschäumung von Softwood-Schwarzablauge wie bei den nicht-emulgierten Entschäumern. Auch hier zeigen sich die erfindungsgemäßen Entschäumer **F1** und **F2** mit niedrigem Verlustfaktor (tan delta) sowie niedrigem Δ tan delta den Vergleichsbeispielen **VF3 und VF5** überlegen.

### Beispiele 6:

### Prüfung der Entschäumerwirksamkeit der erfindungsgemäßen Entschäumerformulierungen C2 mit den Organopolysiloxanen (1-2) in der Waschmittel-Entschäumung:

### (Erfindungsgemäße) pulverförmige Entschäumerformulierung F5:

In einem Becherglas werden 56,3 g Natriumbicarbonat, 56,3 g Natriumsulfat sowie 15,0 g einer nativen Cellulose, wie z.B. Arbocel UFC M8 (käuflich erhältlich bei der Fa. Rettenmaier & Söhne), vorgelegt und unter intensivem Mischen mit einem Flügelrührer miteinander gemischt. 22,5 g der Entschäumerformulierung **C2** werden unter intensivem Rühren langsam zugegeben. Es wurde ein weißes, rieselfähiges Pulver erhalten.

### Prüfungen der Entschäumerwirksamkeit in der Waschmaschine

Zu 130 g eines Waschpulvers ECE-2 der Firma WFK wurde eine bestimmte Menge (siehe Tabelle 7) an Entschäumerformulierung **C2** bzw. **F5** gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm gestartet. Das Programm läuft bei einer Temperatur von 40°C und einer Wasserhärte von 3°GH ab. Die Schaumhöhe wird über einen Zeitraum von 55 Minuten aufgezeichnet. Aus den über den Gesamtzeitraum ermittelten Schaumnoten (0% kein Schaum messbar bis 100% Überschäumen) wird die durchschnittliche Schaumnote bestimmt. Je niedriger diese ist, desto wirksamer ist die Entschäumerformulierung über den gesamten Zeitraum.

**Tabelle 7: Entschäumerwirkung der Entschäumerformulierungen C2 und F5 in einer Waschmaschine:**

| Entschäumerformulierung | Dosierung pro 100 g Waschpulver | durchschnittliche Schaumnote |
|---|---|---|
| **C2** | 0,15 g | 3 % |
| **F5** | 1,33 g | 5% |

Die Entschäumerformulierungen **C2** und **F5** weisen über den gesamten Waschzeitraum eine exzellente Antischaumwirkung auf.

## Patentansprüche

1. Entschäumerformulierungen enthaltend
(1) Organopolysiloxane enthaltend pro Molekül mindestens eine Struktureinheit der allgemeinen Formel
O_{1/2}R₂Si-Y-SiRO_{2/2} (I)
und mindestens 2 Einheiten der allgemeinen Formel
R¹R₂SiO_{1/2} (II)
und Einheiten der allgemeinen Formel
R₂SiO_{2/2} (III),
wobei
R gleich oder verschieden sein kann und einen einwertigen SiC-gebundenen Kohlenwasserstoffrest mit 1 bis 30 C-Atomen, der ein oder mehrere voneinander getrennte O-Atome enthalten kann und der frei von aliphatischen Kohlenstoff-Kohlenstoff-Mehrfachbindungen ist, bedeutet und
R¹ gleich R oder ein Alkenylrest mit 2 bis 30 C-Atomen, vorzugsweise ein Methyl- oder ein Vinylrest ist, wobei mindestens ein Alkenylrest pro Molekül enthalten ist,
Y einen zweiwertigen Kohlenwasserstoffrest mit 2 bis 30 C-Atomen bedeutet,
mit der Maßgabe, dass das Organopolysiloxan ein Strukturelement der Formel
R₂Y²SiO-(SiR₂O)ₓ₁-SiRY¹O-(SiR₂O)ₓ₂-SiR₂R¹ (IV)
enthält, wobei
R und R¹ die oben dafür angegebene Bedeutung haben,
Y¹ einen zweiwertigen Kohlenwasserstoffrest mit 2 bis 30 C-Atomen, der an eine Gruppe der Formel SiR₂O_{1/2} gebunden ist, bedeutet,
Y² einen zweiwertigen Kohlenwasserstoffrest mit 2 bis 30 C-Atomen, der an eine Gruppe der Formel SiRO_{2/2} gebunden ist, bedeutet und
x₁ und x₂ gleich 0 oder eine ganze Zahl ist,
mit der Maßgabe, dass die Summe x₁+x₂=x ist,
wobei x durchschnittlich größer 5, vorzugsweise größer 10, und kleiner 100, vorzugsweise kleiner 80, bevorzugt kleiner 60, ist,
(2) Füllstoffe und
(3) Organopolysiloxanharze aus Einheiten der allgemeinen Formel
R²ₑ(R³O)_{f}SiO_{(4-e-f)/2} (V),
worin
R² gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
R³ gleich oder verschieden sein kann und ein Wasserstoffatom oder einen einwertigen, gegebenenfalls substituierten Kohlenwasserstoffrest mit 1 bis 4 C-Atomen bedeutet,
e 0, 1, 2 oder 3 ist und
f 0, 1, 2 oder 3 ist,
mit der Maßgabe, dass die Summe e+f kleiner oder gleich 3 ist und in weniger als 50 % aller Einheiten der Formel (V) im Organopolysiloxanharz die Summe e+f gleich 2 ist.

2. Entschäumerformulierungen nach Anspruch 1, **dadurch gekennzeichnet, dass** Y sowie Y¹ und Y² ein Rest der Formel -CH₂CH₂- ist.

3. Entschäumerformulierungen nach Anspruch 1, **dadurch gekennzeichnet, dass** die Organopolysiloxane (1) hergestellt werden, indem
(A) oligomere oder polymere Organosiliciumverbindungen, die Einheiten der allgemeinen Formel
R¹R₂SiO_{1/2} (II),
Einheiten der allgemeinen Formel
R₂SiO_{2/2} (III),
und Einheiten der allgemeinen Formel
HRSiO_{2/2} (VII)
enthalten, wobei
R und R¹ die im Anspruch 1 dafür angegebene Bedeutung haben,
mit der Maßgabe, dass
mindestens ein Alkenylrest R¹ pro Molekül enthalten ist, die Summe der Einheiten HRSiO_{2/2} und R¹R₂SiO_{1/2} durchschnittlich größer als 2,0 ist,
und die Anzahl der Alkenylreste R¹ durchschnittlich größer ist als die Anzahl der Si-gebundenen Wasserstoffatome,
und gegebenenfalls
(B) oligomere oder polymere Organosiliciumverbindungen, die Einheiten der allgemeinen Formel
R⁶R₂SiO_{1/2} (VIII)
und
Einheiten der allgemeinen Formel
R₂SiO_{2/2} (III)
enthalten, wobei
R die in Anspruch 1 dafür angegebene Bedeutung hat und
R⁶ ein Alkenylrest mit 2 bis 30 C-Atomen, vorzugsweise ein Vinylrest ist,
in Gegenwart von
(C) die Anlagerung von Si-gebundenem Wasserstoff an aliphatische Doppelbindung fördernde Katalysatoren umgesetzt werden,
wobei das eingesetzte Verhältnis von aliphatischer Doppelbindung in den Komponenten (A) und gegebenenfalls (B) zu Si-gebundenem Wasserstoff in der Komponente (A) 1,2 bis 10, vorzugsweise 1,5 bis 5,0, bevorzugt 1,7 bis 3,0, beträgt.

4. Entschäumerformulierungen nach Anspruch 3, **dadurch gekennzeichnet, dass** als Organosiliciumverbindungen (A) solche der Formel
R¹R₂SiO-(SiR₂O)ₓ-(HSiR)_{y}-O-SiR₂R¹ (IX)
eingesetzt werden, wobei
R, R¹ und x die in Anspruch 1 dafür angegebene Bedeutung aufweisen,
und y durchschnittlich mindestens 0,5, bevorzugt mindestens 0,6, besonders bevorzugt mindestens 0,7, und durchschnittlich höchstens 1,5, bevorzugt höchstens 1,2 und besonders bevorzugt höchstens 1,0, ist,
mit der Maßgabe, dass mindestens ein Alkenylrest R¹ pro Molekül enthalten ist,
die Summe der Einheiten HRSiO_{2/2} und R¹R₂SiO_{1/2} durchschnittlich größer als 2,0 ist,
und die Anzahl der Alkenylreste R¹ durchschnittlich größer ist als die Anzahl der Si-gebundenen Wasserstoffatome.

5. Entschäumerformulierungen nach Anspruch 3 oder 4, **dadurch gekennzeichnet, dass** als Organosiliciumverbindungen (B) solche der Formel
R⁶R₂SiO-(SiR₂O)_{z}-O-SiR₂R⁶ (X)
eingesetzt werden, wobei
R und R⁶ die in Anspruch 3 dafür angegebene Bedeutung haben und
z durchschnittlich größer 5, vorzugsweise größer 10, und kleiner 1000, vorzugsweise kleiner 500, besonders bevorzugt kleiner 250, ist.

6. Entschäumerformulierungen nach einem der Ansprüche 1 bis 5, **dadurch gekennzeichnet, dass** sie als weitere Bestandteile gegebenenfalls
(4) Polyorganosiloxane der allgemeinen Formel
R⁴R₂SiO(SiR₂O)ₘSiR₂R⁴ (VIa)
oder 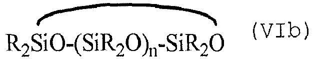 wobei
R gleich oder verschieden sein kann und die in Anspruch 1 dafür angegebene Bedeutung hat,
R⁴ gleich oder verschieden sein kann und R oder -OR⁵ sein kann, wobei
R⁵ ein Wasserstoffatom oder einen einwertigen, gegebenenfalls substituierten Kohlenwasserstoffrest mit 1 bis 25 C-Atomen bedeutet,
m eine ganze Zahl ist, vorzugsweise von 1 bis 2500 ist,
n eine ganze Zahl ist, vorzugsweise von 2 bis 20 ist,
wobei die Polyorganosiloxane auch geringe Anteile an Verzweigungen, vorzugsweise T-Einheiten (R⁴SiO_{3/2}) und Q-Einheiten (SiO₂), enthalten können,
gegebenenfalls
(5) wasserunlösliche organische Verbindungen, gegebenenfalls
(6) polyethermodifizierte Polysiloxane, welche linear oder verzweigt sein können und mindestens eine Polyethergruppe enthalten
und gegebenenfalls
(7) alkalische oder saure Katalysatoren oder deren Umsetzungsprodukte mit den Komponenten (1) bis (6), enthalten.

7. Entschäumerformulierungen nach einem der Ansprüche 1 bis 6, **dadurch gekennzeichnet, dass** die Entschäumerformulierungen bei 100 rad/s einen Verlustfaktor (tan delta) zwischen 1,0 und 5,0, bevorzugt zwischen 1,5 und 3,0 aufweisen, wobei über den betrachteten Frequenzbereich von 1 bis 100 rad/s der Unterschied im Verlustfaktor (Δ tan delta) kleiner als 1,5, bevorzugt kleiner als 1,0, ist, und die Entschäumer eine Viskosität bei 100 rad/s zwischen 1000 mPa.s und 300.000 mPa.s, bevorzugt zwischen 2000 und 100.000 mPa.s, aufweisen, jeweils gemessen bei 25°C, wobei der Verlustfaktor und die Viskosität nach DIN 53019-4 bestimmt werden.

8. Entschäumerformulierungen nach einem der Ansprüche 1 bis 7, **dadurch gekennzeichnet, dass** als Organopolysiloxanharze (3) MQ-Harze aus Einheiten der Formeln
SiO₂ (Q-Einheiten) und
R²₃SiO_{1/2} (M-Einheiten),
eingesetzt werden, wobei
R² und R³ die in Anspruch 1 dafür angegebene Bedeutung haben, das molare Verhältnis von M- zu Q-Einheiten dabei vorzugsweise im Bereich von 0,5 bis 2,0 liegt, die MQ-Harze neben den M- und Q-Einheiten gegebenenfalls noch geringe Mengen an R²SiO_{3/2} oder (R³O)SiO_{3/2} (T)-Einheiten oder R²₂SiO_{2/2} (D)-Einheiten, in Mengen von vorzugsweise 0,01 bis 20 Mol%,
bezogen auf die Summe aller Siloxaneinheiten, enthalten und die MQ-Harze bis zu 10 Gew.-% freie Si-gebundene Hydroxy- oder Alkoxygruppen enthalten können.

9. Entschäumerformulierungen nach einem der Ansprüche 6 bis 8, **dadurch gekennzeichnet, dass** als wasserunlösliche organische Verbindungen (5) solche mit einem Siedepunkt größer als 100°C bei 900 bis 1100 hPa, insbesondere solche ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z.B. Pentandiol-1,3-diisobutyrat, Fettsäureestern, wie z.B. Octylstearat, Dodecylpalmitat oder iso-Propylmyristat, Fettalkoholen, Ethern niedermolekularer Alkohole, Phthalaten, Estern der Phosphorsäure und Wachsen, eingesetzt werden.

10. Entschäumerformulierungen nach einem der Ansprüche 1 bis 9, **dadurch gekennzeichnet, dass** die Entschäumerformulierungen
(1) mindestens 30 Gew.%, insbesondere mindestens 50 Gew.%, und höchstens 98 Gew.%, insbesondere höchstens 85 Gew.%, Organopolysiloxane gemäß Anspruch 1 oder 2 oder hergestellt nach den Ansprüchen 3 bis 5,
(2) mindestens 1 Gew.%, insbesondere mindestens 3 Gew.%, und höchstens 15 Gew.%, insbesondere höchstens 10 Gew.%, Füllstoffe,
(3) mindestens 1 Gew.%, insbesondere mindestens 3 Gew.%, und höchstens 15 Gew.%, insbesondere höchstens 10 Gew.%, Organopolysiloxanharze aus Einheiten der Formel (V) oder gemäß Anspruch 8,
(4) mindestens 0 Gew.%, insbesondere mindestens 5 Gew.%, und höchstens 40 Gew.%, insbesondere höchstens 20 Gew.%, Polyorganosiloxane der allgemeinen Formel (VIa) oder (VIb),
(5) mindestens 0 Gew.% und höchstens 15 Gew.%, insbesondere höchstens 7,5 Gew.%, wasserunlösliche organische Verbindungen,
(6) mindestens 0 Gew.% und höchstens 15 Gew.%, insbesondere höchstens 7,5 Gew.%, polyethermodifizierte Polysiloxane, welche linear oder verzweigt sein können und mindestens eine Polyethergruppe tragen, und
(7) mindestens 0 Gew.%, insbesondere mindestens 0,1 Gew.%, und höchstens 1 Gew.%, insbesondere höchstens 0,3 Gew.%, alkalische oder saure Katalysatoren oder deren Umsetzungsprodukte mit den Komponenten (1) bis (6) enthalten.

11. Emulsionen von Entschäumerformulierungen enthaltend Entschäumerformulierungen nach einem der Ansprüche 1 bis 10 Emulgatoren und
Wasser.

12. Pulver enthaltend
Entschäumerformulierungen nach einem der Ansprüche 1 bis 10 und Trägermaterialien.

13. Wasch- oder Reinigungsmittel enthaltend Entschäumerformulierungen nach einem der Ansprüche 1 bis 10 oder deren Emulsionen nach Anspruch 11 oder deren Pulver nach Anspruch 12.

14. Verfahren zum Entschäumen und/oder zur Verhinderung des Schäumens von Medien, indem die Entschäumerformulierungen nach einem der Ansprüche 1 bis 10 oder deren Emulsionen nach Anspruch 11 oder deren Pulver nach Anspruch 12 mit den Medien vermischt werden.

15. Verfahren nach Anspruch 14, **dadurch gekennzeichnet, dass** bei der Zellstoffherstellung anfallende wässrige Medien eingesetzt werden.

## Claims

1. Defoamer formulations containing
(1) organopolysiloxanes containing per molecule at least one structural unit of general formula
O_{1/2}R₂Si-Y-SiRO_{2/2} (I)
and at least 2 units of general formula
R¹R₂SiO_{1/2} (II)
and units of general formula
R₂SiO_{2/2} (III),
wherein
R may be identical or different and represents a monovalent SiC-bonded hydrocarbon radical having 1 to 30 carbon atoms which may contain one or more nonadjacent O-atoms and which is free from aliphatic carbon-carbon multiple bonds and
R¹ is R or an alkenyl radical having 2 to 30 carbon atoms, preferably a methyl radical or a vinyl radical, wherein at least one alkenyl radical per molecule is present,
Y represents a divalent hydrocarbon radical having 2 to 30 carbon atoms,
with the proviso that the organopolysiloxane contains a structural element of formula
R₂Y²SiO-(SiR₂O)ₓ₁-SiRY¹O-(SiR₂O)ₓ₂-SiR₂R¹ (IV),
wherein
R and R¹ are as defined above,
Y¹ represents a divalent hydrocarbon radical having 2 to 30 carbon atoms which is bonded to a group having the formula SiR₂O_{1/2},
Y² represents a divalent hydrocarbon radical having 2 to 30 carbon atoms which is bonded to a group having the formula SiRO_{2/2}, and
x₁ and x₂ are 0 or an integer,
with the proviso that the sum of x₁+x₂ is x, wherein x is on average more than 5, preferably more than 10, and less than 100, by preference less than 80, preferably less than 60,
(2) fillers and
(3) organopolysiloxane resins composed of units of general formula
R²ₑ(R³O)_{f}SiO_{(4-e-f)/2} (V),
wherein
R² may be identical or different and represents a hydrogen atom or a monovalent, optionally substituted, SiC-bonded hydrocarbon radical having 1 to 30 carbon atoms,
R³ may be identical or different and represents a hydrogen atom or a monovalent, optionally substituted hydrocarbon radical having 1 to 4 carbon atoms,
e is 0, 1, 2 or 3 and
f is 0, 1, 2, or 3,
with the proviso that the sum of e+f is not more than 3 and that the sum of e+f is 2 in less than 50% of all units of formula (V) in the organopolysiloxane resin.

2. Defoamer formulations according to Claim 1, **characterized in that** Y and Y¹ and Y² are each a radical of formula -CH₂CH₂-.

3. Defoamer formulations according to Claim 1, **characterized in that** the organopolysiloxanes (1) are produced when
(A) oligomeric or polymeric organosilicon compounds containing units of general formula
R¹R₂SiO_{1/2} (II),
units of general formula
R₂SiO_{2/2} (III),
and units of general formula
HRSiO_{2/2} (VII),
wherein
R and R¹ are as defined in Claim 1,
with the proviso that
at least one alkenyl radical R¹ per molecule is present,
the sum of the units HRSiO_{2/2} und R¹R₂SiO_{1/2} is on average greater than 2.0,
and the number of alkenyl radicals R¹ is on average greater than the number of Si-bonded hydrogen atoms
and optionally
(B) oligomeric or polymeric organosilicon compounds containing units of general formula
R⁶R₂SiO_{1/2} (VIII)
and units of general formula
R₂SiO_{2/2} (III),
wherein
R is as defined in Claim 1, and
R⁶ is an alkenyl radical having 2 to 30 carbon atoms, preferably a vinyl radical,
are reacted in the presence of
(C) catalysts which promote the addition of Si-bonded hydrogen onto aliphatic double bonds,
wherein the employed ratio of aliphatic double bond in the components (A) and optionally (B) to Si-bonded hydrogen in the component (A) is 1.2 to 10, by preference 1.5 to 5.0, preferably 1.7 to 3.0.

4. Defoamer formulations according to Claim 3, **characterized in that** the organosilicon compounds (A) employed are those of formula
R¹R₂SiO-(SiR₂O)ₓ-(HSiR)_{y}-O-SiR₂R¹ (IX),
wherein
R, R¹ and x are as defined in Claim 1,
and y is on average at least 0.5, preferably at least 0.6, particularly preferably at least 0.7, and on average not more than 1.5, preferably not more than 1.2 and particularly preferably not more than 1.0, with the proviso that at least one alkenyl radical R¹ per molecule is present,
the sum of the units HRSiO_{2/2} und R¹R₂SiO_{1/2} is on average greater than 2.0,
and the number of alkenyl radicals R¹ is on average greater than the number of Si-bonded hydrogen atoms.

5. Defoamer formulations according to Claim 3 or 4, **characterized in that** the organosilicon compounds (B) employed are those of formula
R⁶R₂SiO-(SiR₂O)_{z}-O-SiR₂R⁶ (X),
wherein
R and R⁶ are as defined in Claim 3 and
z is on average more than 5, preferably more than 10, and less than 1000, preferably less than 500, particularly preferably less than 250.

6. Defoamer formulations according to any of Claims 1 to 5, **characterized in that** it contains as further constituents
optionally
(4) polyorganosiloxanes of general formula
R⁴R₂SiO(SiR₂O)ₘSiR₂R⁴ (VIa)
or 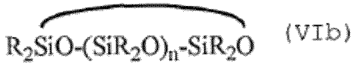 wherein
R may be identical or different and is as defined in Claim 1,
R⁴ may be identical or different and may be R or -OR⁵, wherein
R⁵ represents a hydrogen atom or a monovalent, optionally substituted hydrocarbon radical having 1 to 25 carbon atoms,
m is an integer, preferably from 1 to 2500,
n is an integer, preferably from 2 to 20,
wherein the polyorganosiloxanes may also contain small proportions of branchings, preferably T units (R⁴SiO_{3/2}) and Q units (SiO₂),
optionally
(5) water-insoluble organic compounds,
optionally
(6) polyether-modified polysiloxanes which may be linear or branched and contain at least one polyether group
and optionally
(7) alkaline or acidic catalysts or their reaction products with the components (1) to (6).

7. Defoamer formulations according to any of Claims 1 to 6, **characterized in that** the defoamer formulations have a loss factor (tan delta) at 100 rad/s between 1.0 and 5.0, preferably between 1.5 and 3.0, wherein over the considered frequency range of 1 to 100 rad/s the difference in the loss factor (Δ tan delta) is less than 1.5, preferably less than 1.0, and the defoamer has a viscosity at 100 rad/s between 1000 mPa.s and 300 000 mPa.s, preferably between 2000 and 100 000 mPa.s, in each case measured at 25°C, wherein the loss factor and the viscosity are determined according to DIN 53019-4.

8. Defoamer formulations according to any of Claims 1 to 7, **characterized in that** the organopolysiloxane resins (3) employed are MQ resins composed of units of formulae
SiO₂ (Q units) and
R²₃SiO_{1/2} (M units),
wherein
R² and R³ are as defined in Claim 1, the molar ratio of M units to Q units is preferably in the range from 0.5 to 2.0, the MQ resins optionally also contain in addition to the M units and Q units small amounts of R²SiO_{3/2} or (R³O)SiO_{3/2} (T) units or R²₂SiO_{2/2} (D) units in amounts of by preference 0.01 to 20 mol% based on the sum of all siloxane units and the MQ resins may contain up to 10% by weight of free Si-bonded hydroxyl or alkoxy groups.

9. Defoamer formulations according to any of Claims 6 to 8, **characterized in that** the water-insoluble organic compounds (5) employed are those having a boiling point greater than 100°C at 900 to 1100 hPa, in particular those selected from mineral oils, native oils, isoparaffins, polyisobutylenes, residues from oxo alcohol synthesis, esters of low molecular weight synthetic carboxylic acids, for example pentanediol-1,3-diisobutyrate, fatty acid esters, for example octyl stearate, dodecyl palmitate or isopropyl myristate, fatty alcohols, ethers of low molecular weight alcohols, phthalates, esters of phosphoric acid and waxes.

10. Defoamer formulations according to any of Claims 1 to 9, **characterized in that** the defoamer formulations contain
(1) at least 30% by weight, in particular at least 50% by weight, and not more than 98% by weight, in particular not more than 85% by weight, of organopolysiloxanes according to Claim 1 or 2 or produced according to Claims 3 to 5,
(2) at least 1% by weight, in particular at least 3% by weight, and not more than 15% by weight, in particular not more than 10% by weight, of fillers,
(3) at least 1% by weight, in particular at least 3% by weight, and not more than 15% by weight, in particular not more than 10% by weight, of organopolysiloxane resins composed of units of formula (V) or according to Claim 8,
(4) at least 0% by weight, in particular at least 5% by weight, and not more than 40% by weight, in particular not more than 20% by weight, of polyorganosiloxanes of general formula (VIa) or (VIb),
(5) at least 0% by weight and not more than 15% by weight, in particular not more than 7.5% by weight, of water-insoluble organic compounds,
(6) at least 0% by weight and not more than 15% by weight, in particular not more than 7.5% by weight, of polyether-modified polysiloxanes which may be linear or branched and bear at least one polyether group and
(7) at least 0% by weight, in particular at least 0.1% by weight, and not more than 1% by weight, in particular not more than 0.3% by weight, of alkaline or acidic catalysts or their reaction products with the components (1) to (6).

11. Emulsions of defoamer formulations containing defoamer formulations according to any of Claims 1 to 10,
emulsifiers and
water.

12. Powders containing
defoamer formulations according to any of Claims 1 to 10 and support materials.

13. Washing or cleaning compositions containing defoamer formulations according to any of Claims 1 to 10 or emulsions thereof according to Claim 11 or powders thereof according to Claim 12.

14. Process for defoaming and/or preventing foaming of media by mixing the defoamer formulations according to any of Claims 1 to 10 or emulsions thereof according to Claim 11 or powders thereof according to Claim 12 with the media.

15. Process according to Claim 14, **characterized in that** aqueous media generated in chemical pulp production are employed.

## Revendications

1. Formulations d'antimousses contenant
(1) des organopolysiloxanes contenant par molécule au moins un motif structural de formule générale
O_{1/2}R₂Si-Y-SiRO_{2/2} (I)
et au moins 2 motifs de formule générale
R¹R₂SiO_{1/2} (II)
et des motifs de formule générale
R₂SiO_{2/2} (III),
R pouvant être identique ou différent et signifiant un radical hydrocarboné monovalent lié par SiC comportant 1 à 30 atome(s) C, qui peut contenir un ou plusieurs atomes O séparés les uns des autres et qui est exempt de liaisons multiples aliphatiques carbone-carbone et
R¹ étant égal à R ou étant un radical alcényle comportant 2 à 30 atomes C, de préférence un radical méthyle ou un radical vinyle, au moins un radical alcényle étant contenu par molécule,
Y signifiant un radical hydrocarboné divalent comportant 2 à 30 atomes C,
étant entendu que l'organopolysiloxane contient un élément structural de formule
R₂Y²SiO-(SiR₂O)ₓ₁-SiRY¹O-(SiR₂O)ₓ₂-SiR₂R¹ (IV),
R et R¹ possédant la signification indiquée ci-dessus pour ceux-ci,
Y¹ signifiant un radical hydrocarboné divalent comportant 2 à 30 atomes C, qui est lié à un groupe de formule SiR₂O_{1/2},
Y² signifiant un radical hydrocarboné divalent comportant 2 à 30 atomes C, qui est lié à un groupe de formule SiRO_{2/2}, et
x₁ et x₂ étant égaux à 0 ou étant un nombre entier,
étant entendu que la somme est x₁ + x₂ = x,
x étant en moyenne supérieur à 5, de préférence supérieur à 10, et inférieur à 100, de préférence inférieur à 80, préférablement inférieur à 60,
(2) des charges et
(3) des résines d'organopolysiloxane composées de motifs de formule générale
R²ₑ(R³O)_{f}SiO_{(4-e-f)/2} (V),
dans laquelle
R² peut être identique ou différent et signifie un atome d'hydrogène ou un radical hydrocarboné monovalent, éventuellement substitué, lié par SiC comportant 1 à 30 atome(s) C,
R³ peut être identique ou différent et signifie un atome d'hydrogène ou un radical hydrocarboné monovalent, éventuellement substitué, comportant 1 à 4 atome(s) C,
e est 0, 1, 2 ou 3 et
f est 0, 1, 2 ou 3,
étant entendu que la somme e + f est inférieure ou égale à 3 et dans moins de 50 % de tous les motifs de formule (V) dans la résine d'organopolysiloxanes la somme e + f est égale à 2.

2. Formulations d'antimousses selon la revendication 1, **caractérisées en ce que** Y ainsi que Y¹ et Y² est un radical de formule -CH₂CH₂-.

3. Formulations d'antimousses selon la revendication 1, **caractérisées en ce que** les organopolysiloxanes (1) sont préparés par le fait que
(A) des composés de type organosilicium oligomériques ou polymériques, qui contiennent des motifs de formule générale
R¹R₂SiO_{1/2} (II),
des motifs de formule générale
R₂SiO_{2/2} (III),
et des motifs de formule générale
HRSiO_{2/2} (VII),
R et R¹ possédant la signification indiquée pour ceux-ci dans la revendication 1,
étant entendu
qu'au moins un radical alcényle R¹ est contenu par molécule,
la somme des motifs HRSiO_{2/2} et R¹R₂SiO_{1/2} est en moyenne supérieure à 2,0,
et le nombre des radicaux alcényle R¹ est en moyenne supérieur au nombre des atomes d'hydrogène liés à Si,
et éventuellement
(B) des composés de type organosilicium oligomériques ou polymériques, qui contiennent des motifs de formule générale
R⁶R₂SiO_{1/2} (VIII)
et des motifs de formule générale
R₂SiO_{2/2} (III),
R possédant la signification indiquée pour celui-ci dans la revendication 1 et
R⁶ étant un radical alcényle comportant 2 à 30 atomes C, de préférence un radical vinyle, sont transformés en présence de
(C) catalyseurs promouvant l'addition d'hydrogène lié à Si sur une double liaison aliphatique,
le rapport utilisé de double liaison aliphatique dans les composants (A) et éventuellement (B) à hydrogène lié à Si dans le composant (A) étant de 1,2 à 10, de préférence de 1,5 à 5,0, préférablement de 1,7 à 3,0.

4. Formulations d'antimousses selon la revendication 3, **caractérisées en ce qu'**en tant que composés de type organosilicium (A), ceux de formule
R¹R₂SiO-(SiR₂O)ₓ-(HSiR)_{y}-O-SiR₂R¹ (IX)
sont utilisés,
R, R¹ et x présentant la signification indiquée pour ceux-ci dans la revendication 1,
et y étant en moyenne au moins 0,5, préférablement au moins 0,6, particulièrement préférablement au moins 0,7, et en moyenne au plus 1,5, préférablement au plus 1,2 et particulièrement préférablement au plus 1,0,
étant entendu qu'au moins un radical alcényle R¹ est contenu par molécule,
la somme des motifs HRSiO_{2/2} et R¹R₂SiO_{1/2} est en moyenne supérieure à 2,0,
et le nombre des radicaux alcényle R¹ est en moyenne supérieur au nombre des atomes d'hydrogène liés à Si.

5. Formulations d'antimousses selon la revendication 3 ou 4, **caractérisées en ce qu'**en tant que composés de type organosilicium (B), ceux de formule
R⁶R₂SiO-(SiR₂O)_{z}-O-SiR₂R⁶ (X)
sont utilisés,
R et R⁶ présentant la signification indiquée pour ceux-ci dans la revendication 3,
z étant en moyenne supérieur à 5, de préférence supérieur à 10, et inférieur à 1 000, de préférence inférieur à 500, particulièrement préférablement inférieur à 250.

6. Formulations d'antimousses selon l'une quelconque des revendications 1 à 5, **caractérisées en ce qu'**elles contiennent en tant qu'ingrédients supplémentaires éventuellement
(4) des polyorganosiloxanes de formule générale
R⁴R₂SiO(SiR₂O)ₘSiR₂R⁴ (VIa)
ou 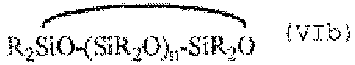
R pouvant être identique ou différent et possédant la signification indiquée pour celui-ci dans la revendication 1,
R⁴ pouvant être identique ou différent et pouvant être R ou -OR⁵,
R⁵ signifiant un atome d'hydrogène ou un radical hydrocarboné monovalent, éventuellement substitué, comportant 1 à 25 atome(s) C,
m étant un nombre entier, de préférence de 1 à 2 500,
n étant un nombre entier, de préférence étant de 2 à 20,
les polyorganosiloxanes pouvant contenir également de faibles proportions de ramifications, de préférence des motifs T (R⁴SiO_{3/2}) et des motifs Q (SiO₂), éventuellement
(5) des composés organiques insolubles dans l'eau,
éventuellement
(6) des polysiloxanes modifiés par polyéther, qui peuvent être linéaires ou ramifiés et contiennent au moins un groupe polyéther
et éventuellement
(7) des catalyseurs alcalins ou acides ou leurs produits de transformation avec les composants (1) à (6).

7. Formulations d'antimousses selon l'une quelconque des revendications 1 à 6, **caractérisées en ce que** les formulations d'antimousses présentent un facteur de perte (tan delta) à 100 rad/s compris entre 1,0 et 5,0, préférablement entre 1,5 et 3,0, la différence dans le facteur de perte (Δ de tan delta), sur le domaine de fréquence considéré de 1 à 100 rad/s, étant inférieure à 1,5, préférablement inférieure à 1,0, et les antimousses présentant une viscosité à 100 rad/s comprise entre 1 000 mPa.s et 300 000 mPa.s, préférablement entre 2 000 et 100 000 mPa.s, à chaque fois mesurée à 25 °C, le facteur de perte et la viscosité étant déterminés d'après la norme DIN 53019-4.

8. Formulations d'antimousses selon l'une quelconque des revendications 1 à 7, **caractérisées en ce qu'**en tant que résines (3) d'organopolysiloxane, des résines MQ composées de motifs de formule SiO₂ (motifs Q) et
R²₃SiO_{1/2} (motifs M),
sont utilisées,
R² et R³ possédant la signification indiquée pour ceux-ci dans la revendication 1, le rapport molaire des motifs M aux motifs Q se situant en l'occurrence de préférence dans la plage de 0,5 à 2,0, les résines MQ contenant, outre les motifs M et Q, éventuellement encore de faibles quantités de motifs T R²SiO_{3/2} ou (R³O)SiO_{3/2} ou de motifs D R²₂SiO_{2/2}, de préférence en des quantités de 0,01 à 20 % en moles, par rapport à la somme de tous les motifs siloxane, et les résines MQ pouvant contenir jusqu'à 10 % en poids de groupes hydroxy ou alcoxy libres liés à Si.

9. Formulations d'antimousses selon l'une quelconque des revendications 6 à 8, **caractérisées en ce qu'**en tant que composés organiques (5) insolubles dans l'eau, ceux dotés d'un point d'ébullition supérieur à 100 °C à une pression de 900 à 1100 hPa sont utilisés, en particulier ceux choisis parmi les huiles minérales, les huiles natives, les isoparaffines, les polyisobutylènes, les résidus de la synthèse d'oxoalcool, les esters d'acides carboxyliques synthétiques à bas poids moléculaire, comme par exemple le diisobutyrate de 1,3-pentanediol, les esters d'acides gras, comme par exemple le stéarate d'octyle, le palmitate de dodécyle ou le myristate d'iso-propyle, les alcools gras, les éthers d'alcool à bas poids moléculaire, les phtalates, les esters de l'acide phosphorique et les cires.

10. Formulations d'antimousses selon l'une quelconque des revendications 1 à 9, **caractérisées en ce que** les formulations d'antimousses contiennent
(1) au moins 30 % en poids, en particulier au moins 50 % en poids, et au plus 98 % en poids, en particulier au plus 85 % en poids, d'organopolysiloxanes selon la revendication 1 ou 2 ou préparés selon les revendications 3 à 5,
(2) au moins 1 % en poids, en particulier au moins 3 % en poids et au plus 15 % en poids, en particulier au plus 10 % en poids, de charges,
(3) au moins 1 % en poids, en particulier au moins 3 % en poids, et au plus 15 % en poids, en particulier au plus 10 % en poids de résines d'organopolysiloxane composées de motifs de formule (V) ou selon la revendication 8,
(4) au moins 0 % en poids, en particulier au moins 5 % en poids, et au plus 40 % en poids, en particulier au plus 20 % en poids, de polyorganosiloxanes de formule générale (VIa) ou (VIb),
(5) au moins 0 % en poids et au plus 15 % en poids, en particulier au plus 7,5 % en poids de composés organiques insolubles dans l'eau,
(6) au moins 0 % en poids et au plus 15 % en poids, en particulier au plus 7,5 % en poids, de polysiloxanes modifiés par polyéther, qui peuvent être linéaires ou ramifiés et portent au moins un groupe polyéther, et
(7) au moins 0 % en poids, en particulier au moins 0,1 % en poids, et au plus 1 % en poids, en particulier au plus 0,3 % en poids, de catalyseurs alcalins ou acides ou de leurs produits de transformation avec les composants (1) à (6).

11. Émulsions de formulations d'antimousses contenant des formulations d'antimousses selon l'une quelconque des revendications 1 à 10, des émulsifiants et de l'eau.

12. Poudre contenant des formulations d'antimousses selon l'une quelconque des revendications 1 à 10 et des matériaux de support.

13. Produit de lavage ou de nettoyage contenant des formulations d'antimousses selon l'une quelconque des revendications 1 à 10 ou leurs émulsions selon la revendication 11 ou leurs poudres selon la revendication 12.

14. Procédé pour le démoussage et/ou l'empêchement du moussage de milieux, dans lequel les formulations d'antimousses selon l'une quelconque des revendications 1 à 10 ou leurs émulsions selon la revendication 11 ou leurs poudres selon la revendication 12 sont mélangées avec les milieux.

15. Procédé selon la revendication 14, **caractérisé en ce que** des milieux aqueux produits dans la production de pulpe sont utilisés.
